# EUROPÄISCHE PATENTSCHRIFT

(11) **EP 1 066 956 B1**
(45) Veröffentlichungstag und Bekanntmachung des Hinweises auf die Patenterteilung: **13.10.2004**
(21) Anmeldenummer: 00113982.3
(22) Anmeldetag: 01.07.2000
(51) Int. Cl.: B32B 3/10, B32B 15/04, B23K 11/08, B23K 26/00, F16J 15/00, B32B 15/08, F16J 15/12

(54) **Schichtverbund mit geschweisster Metalleinlage**
Laminated structure with welded metal insert
Stratifié avec insert métallique soudé

(30) Priorität: 06.07.1999 DE 19930931
(43) Veröffentlichungstag der Anmeldung: 10.01.2001
(73) Patentinhaber: SGL CARBON AG, 65203 Wiesbaden (DE)
(72) Erfinder: Jung, Manfred, 86679 Ellgau (DE); Öttinger, Oswin, Dr.-Ing., 86405 Meitingen (DE)

(56) Entgegenhaltungen:
- DE-A- 3 617 701
- US-A- 3 762 028

## Beschreibung

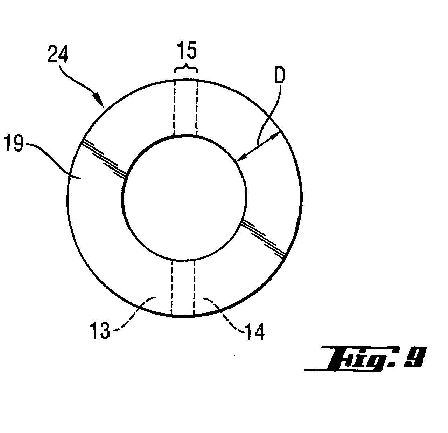

Die vorliegende Erfindung betrifft metallverstärkte Schichtverbunde auf der Basis von einem oder mehreren Weichstoffen, insbesondere Dichtungsplatten, und ein Verfahren zu deren Herstellung. Die erfindungsgemäßen metallverstärkten Schichtverbunde weisen mindestens eine Metalleinlage auf, wobei die Metalleinlage aus mindestens zwei sich mindestens partiell überlappenden Metallfolien besteht, die im Überlappungsbereich miteinander verbunden sind. Die Erfindung ermöglicht, Verbundplatten mit großen Abmessungen herzustellen, die als Dichtungsplatten höchsten technischen Anforderungen gerecht werden. Aus diesen Dichtungsplatten werden Dichtungen, insbesondere Flachdichtungen in ringförmiger Form, wie in Figur 9 gezeigt, durch Ausstanzen hergestellt.

Schichtverbunde auf der Basis von einem oder mehreren Weichstoffen werden zur Verbesserung der mechanischen Festigkeit häufig mit dünnen Metallfolien verstärkt. Zu den in den Schichtverbunden verwandten Weichstoffen gehören Thermoplaste, vor allem auf PTFE- Basis, und Elastomere, die durch anorganische oder organische Fasern wie z.B. Aramid-, Kohlenstoff-, Keramik- und Metallfasern verstärkt sein können oder deren Druckfestigkeit durch Füllstoffe wie z.B. Siliciumdioxid, Aluminuimoxid, Kohlenstoff, Graphit in Pulverform erhöht sein kann. Außerdem kommen als Weichstoffe anorganische und druckfeste Materialien wie insbesondere Glimmer und Graphit zum Einsatz. Als besondere Graphitvariante werden auch aus expandiertem Graphit hergestellte Folien und Laminate, im folgenden gemeinsam Graphitfolien genannt, angewendet. Entsprechende Schichtverbunde sind z.B. in der deutschen Patentanmeldung mit dem Aktenzeichen 198 04 283.3 beschieben. Als Metalleinlagen können neben einfachen Metallfolien auch Spießbleche angewendet werden, deren Spieße sich zu einer oder beiden Seiten erstrecken können. Im einfachsten Fall besteht ein metallverstärkter Schichtverbund auf der Basis von einem oder mehreren Weichstoffen aus einer Metallfolienlage, die in zwei Weichstofflagen eingebettet ist.

Die Metallfolien sind kommerziell je nach Werkstoff und Foliendicke nur bis zu einer begrenzten Bahnbreite verfügbar. Zur Herstellung von metallverstärkten Schichtverbunden bzw. Dichtungsplatten mit Abmessungen, bei denen die Bahnbreite der verfügbaren Metallfolien nicht ausreicht, um die Metalleinlagen der Schichtverbunde einer Metallfolienbahn in einem Stück zu entnehmen, ist es erforderlich, mindestens zwei Metallfolien für die Metalleinlage miteinander zu verbinden.

Bisher werden derartige metallverstärkte Schichtverbunde im großtechnischen Maßstab dadurch realisiert, daß man Metallfolienbahnen an ihren seitlichen Enden überlappt und entweder durch Kleben, durch ein mechanisches Verzahnen oder durch Schweißen wie Widerstandsrollnahtschweißen miteinander verbindet. Da die in den Schichtverbunden für die Metalleinlagen eingesetzten Metallfolien zumeist eine geringe Dicke aufweisen, wie z.B. 50 µm oder 100 µm, um ein einfaches Ausstanzen von Dichtungen aus den Schichtverbunden zu ermöglichen, läßt sich ein Stumpf-aneinander-Schweißen der Metallfolien im Rahmen von technischen Produktionsbedingungen zumeist nicht realisieren.

Ein Verfahren und eine Vorrichtung zum Verschweißen stumpf aneinander stoßender Bleche ist aus der DE 195 29 542 A1 bekannt. Dieses Verfahren beruht darauf, daß die zu verschweißenden Bleche sich zunächst in Ihrem Randbereich überlappen, dann die überlappenden Endzonen der Randbereiche mit aufeinander ausgerichteten Schnittkanten abgeschnitten werden, danach die Schnittflächen stumpf aneinander gebracht werden und schließlich die Schnittflächen mittels Laserstrahl miteinander verschweißt werden. Durch diese zeitliche Aufeinanderfolge der Verfahrensschritte kann insbesondere bei langen Bahnen, die bewegt werden, nicht gewährleistet werden, daß sich die Schnittkanten senkrecht zur Bewegungsrichtung der Bahnen noch in der gleichen Position befinden, wenn sie den Ort des Schweißens erreichen, wie sie es sind im Moment des Schneidens. Schon geringe äußere Einflüsse, wie Temperaturschwankungen oder Erschütterungen sowie kleinste Wellen in den dünnen Metallfolien können zu Spalten zwischen den Schnittkanten der Bahnen oder einem erneuten Überlappen der Bahnen führen. Diesem wird gemäß dem in der Offenlegungsschrift beschriebenen Verfahren bei langen Bahnen und/oder großen Breiten der Bahnen durch einen Führungskörper abgeholfen, der die Lage der Bahnen zueinander stabilisiert. Durch ihn werden die zu verschweißenden Metallblechbahnen so geführt, daß der seitliche Rand der Bahnen am Grund eines Schlitzes im Führungskörper anliegt. Bei den Metallfolien, die in den Schichtverbunden der Dichtungsplatten eingesetzt werden, ist diese Führung durch einen Führungskörper jedoch wegen ihrer geringen Dicke von z.T. deutlich unter 0,25 mm im großtechnischen Maßstab jedoch nicht möglich. Beim Bewegen der Metallfolienbahnen durch den Führungskörper wirken am Grund des Führungsschlitzes ausreichend große Kräfte auf die seitliche Kante der Metallfolie, daß diese sehr schnell aufgrund ihrer geringen Stabilität knickt und damit der Rand der Folie zerstört wird oder die Metallfolie sogar einreißt. Dem könnte durch einen sehr engen Führungsschlitz entgegengewirkt werden, was aber dazu führen kann, daß die Metallfolie im Führungsschlitz stecken bleibt und dadurch womöglich reißt. Außerdem kann durch den Einsatz eines derartigen Führungsschlitzes die Metallfolienbahn derart verdrängt werden, daß sich in der Metallfolienbahn eine leichte Welle oder Falte bildet, die die Folienbahnführung nach dem Führungsschlitz unkontrolliert ablaufen läßt. Das in der Offenlegungschrift DE 195 29 542 A1 beschriebene Verfahren zum Stumpfschweißen kann somit nicht bei den besonders dünnen Metallfolien, wie sie in Schichtverbunden für Dichtungskörper üblicherweise angewendet werden, angewandt werden.

Zum Verbinden von Metallfolien für Metalleinlagen für Dichtungsplatten, wobei die Folienenden sich im Bereich der Verbindung überlappen, werden bisher verschiedene Techniken eingesetzt.
Zum einen erfolgt die Verbindung dadurch, daß zwischen den sich überlappenden Folienenden ein Kleber wie z.B. Epoxidharz eingebracht wird, der aushärtet. Zumeist wird hierbei der Kleber über den gesamten Überlappungsbereich auf mindestens einer der zu verbindenden Metallfolien aufgebracht. Das Verkleben der Metallfolien hat den Nachteil, daß Dichtungen, die aus Schichtverbunden hergestellt wurden, die derartig verbundene Metalleinlagen aufweisen, nur in einem eng begrenzten Temperaturbereich eingesetzt werden können. Dies ist dadurch bedingt, daß bei höheren Temperaturen der Klebstoff erweicht und/oder teilweise thermisch abgebaut wird. Hierdurch können zum einen in den Dichtungen die Metallfolien an ihren verklebten Verbindungsstellen unter mechanischer Beanspruchung wie Zugkräften in Richtung der Metallfolien und Druckkräften senkrecht zu den Metalleinlagen leichter gegeneinander abscheren, wodurch die mechanische Stabilität der Dichtungen verringert wird. Durch einen thermischen Abbau des Klebers bleiben im Überlappungsbereich zwischen den verklebten Metallfolienenden nur poröse, undichte pyrolysierte Rückstände des Klebers bestehen. Wenn die hierdurch im Kleber entstandenen Poren ineinander übergehen, können über größere Längen durchgehende Kanäle im Kleberrückstand entstehen, die bei einer Dichtung sich auch vom einen bis zum anderen Dichtungsrand erstrecken können, was dann zu einer wesentlichen Erhöhung der Leckagerate der Dichtung führt, da durch diese Kanäle ein abzudichtendes Medium aus der Dichtung austreten kann. Im weiteren werden derartige Kanäle, die sich von einem Dichtungsrand zum anderen in einer Dichtung erstrecken, als Leckagekanäle der Dichtung bezeichnet. Dichtungen mit Metalleinlagen, die aus miteinander verklebten Metallfolien bestehen, neigen also dazu, bei erhöhten Temperaturen höhere Leckageraten aufzuweisen. Zusätzlich ist die Einsatzmöglichkeit von Dichtungen, die Metalleinlagen mit miteinander verklebten Metallfolien aufweisen auf Medien beschränkt, die den Klebstoff nicht angreifen, da andernfalls durch den Angriff des Mediums am Kleber zum einen wiederum ein Abscheren der Metallfolien durch mechanische Beanspruchungen möglich ist und somit die mechanische Stabilität der Dichtungen verringert wird und zum anderen auch durch den Abbau des Klebstoffs durch das abzudichtende aggressive Medium sich im Klebstoff ähnlich wie bei hohen Temperaturen Leckagekanäle ausbilden können, so daß die Dichtwirkung der Dichtung nicht mehr garantiert ist. Daher ist für die universelle Verwendung von Dichtungen, die aus Schichtverbunden hergestellt werden, die aus mindestens zwei Metallfolien verbundene Metalleinlagen aufweisen, notwendig, daß die Verbindung der Metallfolien dieser Metalleinlagen ohne das Einbringen weiterer Medien wie z.B. Klebstoffe in die Dichtungen erfolgt.

Eine Möglichkeit, zwei Metallfolien zu einer Metallage ohne das Verwenden zusätzlicher Medien zu verbinden, ist das rein mechanische Verklammern der Folien, womit immer auch ein Überlappen der Folienenden verbunden ist. Dabei werden die seitlichen Enden der zu verbindenden Metallfolien derart miteinander verhakt, daß die Schichtverbunde die gleiche mechanische Festigkeit ausweisen wie bei der Verwendung von einteiligen Metalleinlagen. Diese Verbindung beruht auf einem reinen Kontakt zwischen den Metallfolien. Allerdings können Dichtungen, die aus Schichtverbunden mit derartig verbundenen Metalleinlagen hergestellt wurden, erheblich höhere Leckageraten aufweisen als Dichtungen, die aus Schichtstoffen mit einteiligen Metalleinlagen hergestellt wurden.

Beim Verschweißen von Metallfolien gemäß Stand der Technik, werden die Enden der Metallfolien überlappend geführt und durch die im Überlappungsbereich übereinander liegenden Metallfolien durch Erwärmung miteinander verbunden. Die Schweißnaht, d.h. der Bereich, in dem die Metallfolien sich durch die Erwärmung schlüssig verbinden, verläuft in Längserstreckung des Überlappungsbereiches. Hierbei ist die Breite des Überlappungsbereiches zumeist deutlich größer als die Breite der verwandten Schweißnaht. Mit derart verschweißten Metalleinlagen kann eine mechanische Festigkeit der Schichtstoffe wie bei entsprechenden Schichtstoffen erreicht werden, die nur einteilige Metalleinlagen aufweisen.
Als Schweißverfahren können prinzipiell alle bekannten Schweißverfahren wie Preßschweißen, Schmelzschweißen, Widerstandsschweißen und Strahlschweißen angewendet werden. Hierbei werden kontinuierliche und diskontinuierliche Verfahren angewandt. Bei überlappt angeordneten Blechen wird vor allem Widerstandsschweißen in Form von Punktschweißen (diskontinuierliches Schweißen) und Rollnahtschweißen (kontinuierliches Schweißen) angewendet. Beim Punktschweißen werden die Schweißelektroden in der Mitte des Überlappungsbereichs auf die beiden zu verschweißenden Metallfolien aufgesetzt und dann die Folien durch ein Stromimpuls aufgeschmolzen und verbunden. Beim Rollnahtschweißen werden scheibenförmige Elektrodenrollen angewendet, durch die die sich überlappenden Enden der Folienbahnen gezogen werden. Hierdurch wird eine lineare Schweißnaht erzeugt, die in der Mitte des Überlappungsbereichs verläuft. Die Lage von Schweißpunkten bzw. Schweißnaht wird mittig gewählt, um zu garantieren, daß die Schweißelektroden bzw. Schweißelektrodenrollen beim Schweißen in ihrer ganzen Breite die beiden Metallfolien kontaktieren, da andernfalls ein zu hoher Flächenstrom zu einem Wegbrennen der Metallfolien an der Schweißstelle führen kann. Weiterhin kann auch Laserstrahlschweißen zum Verbinden der Metallfolien in ihrem Überlappungsbereich eingesetzt werden. Hierbei wird die Energie des Laserstrahls von den Metallfolien in Form von Wärme absorbiert, wodurch die Metallfolien verschmelzen. Um ein sicheres und einfaches Verschweißen der Metallfolien zu garantieren, sollte der Laserstrahl in der Mitte des Überlappungsbereichs positioniert und die beiden sich überlappenden Metallfolienbahnen relativ zum feststehenden Laser bewegt werden. Es kann somit eine lineare stoffschlüssige Schweißnaht im Überlappungsbereich der Folien erzeugt werden.

Allerdings wurden auch bei Dichtungen, die aus Schichtverbunden hergestellt wurden, die verschweißte Metalleinlagen aufwiesen, teilweise erheblich höhere Leckagerate gemessen als bei entsprechenden Dichtungen, die nur eineilige Metallverstärkungen aufwiesen. Dies ist auch den Tabellen 1 und 2 weiter unten zu entnehmen, in denen die Leckageraten von Dichtungen, die aus Schichtverbunden hergestellt wurden, die nur einteilige Metalleinlagen aufwiesen (Vergleichsbeispiele 1/1 und 2/1), verglichen werden mit den Leckageraten von Dichtungen, die aus Schichtverbunden hergestellt wurden, die Metalleinlagen aufwiesen, die aus mindestens zwei sich mindestens partiell überlappenden Metallfolien bestehen und durch lineare Schweißnähte im Überlappungsbereich der Folien hergestellt wurden (Vergleichsbeispiele 1/2 und 2/2). Man erkennt sofort, daß Dichtungen, die linear verschweißten Metalleinlagen aufweisen, ein Dichtungsverhalten aufweisen, daß weit hinter dem zurücksteht, was technisch aufgrund einteiliger Metalleinlagen möglich ist.

Wie man den vorangehenden Ausführungen entnehmen kann, gibt es viele Ansätze, wie Metalleinlagen für Schichtverbunde herzustellen sind, bei denen mehrere Metallfolien verbunden werden. Keiner dieser Ansätze ermöglichte es jedoch, daß auch aus Schichtverbunden mit derartigen Metalleinlagen Dichtungen hergestellt werden können, die in ihren Eigenschaften bisher bekannten Dichtungen entsprechen, die nur einteilige Metalleinlagen aufweisen. Insbesondere werden durch dieses Problem Schichtverbunden und damit auch Dichtungen Grenzen in ihren Abmessungen gesetzt.

Aufgabe der vorliegenden Erfindung ist die Bereitstellung qualitativ hochwertiger metallverstärkter Schichtverbunde auf der Basis von einem oder mehreren Weichstoffen mit mindestens einer Metalleinlage, die aus mindestens zwei miteinander verbundenen Metallfolien besteht, aus denen Dichtungen hergestellt werden können, die die gleichen Eigenschaften aufweisen wie Dichtungen, die aus entsprechenden Schichtverbunden hergestellt wurden, die nur einteilige Metalleinlagen beinhalteten, und die Bereitstellung von Verfahren zur Herstellung von entsprechenden Schichtverbunden mit aus mindestens zwei Metallfolien verbundenen Metalleinlagen.

Der Begriff qualitativ hochwertig steht u.a. für eine hohe Temperatur- und Medienbeständigkeit sowie eine hohe mechanische Stabilität. Der Vergleich der Eigenschaften von entsprechenden metallverstärkten Schichtverbunden mit und ohne Metalleinlagen, die durch das Verbinden von mindestens zwei Metallfolien hergestellt wurden, bezieht sich aber vor allem auf die Leckageraten von Dichtungen, die aus den Schichtverbunden hergestellt werden.

Eine weitere Aufgabe der vorliegenden Erfindung ist die Bereitstellung von großformatigen und kostengünstigen metallverstärkten Schichtverbunden auf der Basis von einem oder mehreren Weichstoffen, insbesondere Dichtungsplatten, die die gleichen Eigenschaften besitzen wie metallverstärkte Schichtverbunde, die bisher konventionell mit einteiligen Metalleinlagen hergestellt wurden. Insbesondere sollen Dichtungen, die aus den großformatigen Schichtverbunden hergestellt werden, die die gleichen Leckageraten aufweisen wie Dichtungen, die bisher aus den konventionellen Schichtverbunden hergestellt wurden. Zur Lösung dieser Aufgabe ist es, wie oben bereits erläutert, notwendig, daß die großformatigen Schichtverbunde Metalleinlagen beinhalten, die durch das Verbinden mindestens zweier Metallfolien hergestellt wurden.

Außerdem war eine weitere Aufgabe der Erfindung, Dichtungsplatten zur Verfügung zu stellen, aus denen einteilige Dichtungen ausgestanzt werden können, deren Abmessungen über die bisher verfügbaren hinausgehen und die trotzdem die Eigenschaften entsprechend den bisher verfügbaren einteiligen Dichtungen kleinerer Abmessungen aufweisen, insbesondere bezogen auf die Leckageraten der Dichtungen. Hierzu werden Dichtungsplatten benötigt, deren Abmessungen über die bisher verfügbaren Maße hinausgehen, ohne daß hierdurch die Eigenschaften der aus den Dichtungsplatten gestanzten Dichtungen negativ beeinflußt werden.

Gelöst werden diese Aufgaben durch den in den Ansprüchen beschriebenen metallverstärkten Schichtverbund auf der Basis von einem oder mehreren Weichstoffen und durch die in den Ansprüchen beschriebenen Verfahren zur Herstellung derartiger Schichtverbunde.

Demnach wird ein metallverstärkter Schichtverbund auf der Basis von einem oder mehreren Weichstoffen, der mindestens eine Metalleinlage aufweist und bei dem mindestens eine dieser Metalleinlagen durch das Verbinden mindestens zweier sich mindestens partiell überlappender Metallfolien durch mindestens eine Schweißnaht hergestellt wurde, bereitgestellt, bei dem an jeder der im Schichtverbund vorhandenen zwei Metallfolien verbindenden Schweißnaht keine und/oder keine in Längserstreckung des Überlappungsbereichs durchgehenden Leckagekanäle vorhanden sind.

Des weiteren wird ein Verfahren zur Herstellung eines erfindungsgemäßen metallverstärkten Schichtverbundes auf der Basis von mindestens einem Weichstoff bereitgestellt, das auf der folgenden Technik zur Verbindung der sich mindestens partiell überlappenden Metallfolien der Metalleinlagen beruht: das mindestens einmal erfolgende Verschweißen der Folien entlang der Längsrichtung des Überlappungsbereich erfolgt derart, daß sich im Überlappungsbereich zwischen den zu verschweißenden Folien keine und/oder keine in Längserstreckung des Überlappungsbereichs durchgehenden offenen Bereiche ergeben.

Gemäß der Erfindung ist die Schweißnaht so im Überlappungsbereich zu führen, daß die Existenz oder zumindestens die Existenz von durchgehenden Leckagekanälen im Überlappungsbereich ausgeschlossen ist. Bei einer linearen Schweißnaht gemäß dem bisherigen Stand der Technik ist dies nicht gewährleistet. Hier kommt es zu nicht verschweißten Metallfolienüberständen im Überlappungsbereich, die sich in Längsrichtung des Überlappungsbereichs erstrecken. Der Auflage der Metalleinlage aus Weichstoff, die in den Schichtverbunden typischerweise vorhanden ist, ist es nicht möglich, das Volumen zwischen den Metallüberständen auszufüllen, so daß bei einer linearen Schweißnaht an der Schweißnaht im Überlappungsbereich zwischen den Metallfolien offene Bereiche vorliegen, die sich parallel zur Schweißnaht entlang des Überlappungsbereiches erstrecken und im Falle der Verwendung des Schichtstoffs als Dichtungsplatte als Leckagekanäle parallel zur Schweißnaht wirken, die nicht unterbrochen sind. Solche Leckagekanäle sind in ähnlicher Weise bei einer Metalleinlage zu beobachten, bei der durch mechanisches Verklammern zwei Metallfolien verbunden sind. Auch hier kommt es im Bereich der Verklammerung zu Metallüberständen, die nicht durch Weichstofflagen abgedichtet werden können, so daß offene Leckagekanäle entlang der Verklammerung entstehen.

Die beschriebenen durchgehenden Leckagekanäle treten nun bei den erfindungsgemäßen Schichtverbunden nicht auf, wodurch Leckageraten für Dichtungen aus den erfindungsgemäßen Schichtverbunden erzielt werden, die denen von Dichtungen aus Schichtverbunden mit ausschließlich einteiligen Metalleinlagen entsprechen, was die weiter unten dargestellten Untersuchungsergebnisse belegen.

Gemäß der Erfindung kann das Verschweißen der Metallfolien so ausgeführt werden, daß die Länge der nicht durchgehenden Leckagekanäle an den Schweißnähten entlang der Längserstreckung des Überlappungsbereichs die maximale Länge von 25 mm nicht überschreitet. Vorzugsweise liegt die maximale Länge der nicht durchgehenden Leckagekanäle an den Schweißnähten entlang der Längserstreckung des Überlappungsbereichs zwischen 0,5 mm und 5 mm, besonders bevorzugt zwischen 1 und 2 mm.

Die erfindungsgemäßen metallverstärkten Schichtverbunde aus einem oder mehreren Weichstoffen können zusätzlich auf ihren nach außen weisenden Flachseiten vollständig mit einer gasdichten Folie aus organischem Polymer bedeckt und verbunden sein.

Erfindungsgemäß kann mindestens eine der Schweißnähte einen Verlauf aufweisen, der in mindestens einem Punkt P eine Richtungskomponente senkrecht zur Längserstreckung des Überlappungsbereiches der Metallfolien aufweist. Diese mindestens am Punkt P vorliegende Richtungskomponente des Verlaufs der Schweißnaht senkrecht zur Längserstreckung des Überlappungsbereichs wird dadurch erzeugt, daß das Schweißen entlang einer Linie erfolgt, die eine Richtungskomponente senkrecht zur Längserstreckung des Überlappungsbereiches der Metallfolien aufweist.

Die Linie entlang derer das Schweißen erfolgt, weiterhin auch Schweißlinie genannt, ist im Sinne der vorliegenden Erfindung die Linie, entlang derer die Schweißapparatur relativ zu den Metallfolien geführt wird, wobei sich der Schweißapparat und/oder die Metallfolien im Raum bewegen.

Das Verschweißen der mindestens partiell sich überlappenden Metallfolien kann kontinuierlich, jedoch auch mit Unterbrechungen oder gepulst erfolgen. Im kontinuierlichen Schweißbetrieb können die Metallfolien mit Schweißnähten verbunden werden, die ohne Unterbrechung entlang des Überlappungsbereichs verlaufen. Im diesem Fall fällt die Schweißnaht mit der Linie, entlang derer das Schweißen erfolgt, vollständig zusammen. Im teil- bzw. diskontinuierlichen Schweißbetrieb weisen die Schweißnähte mindestens eine Unterbrechung der Schweißnaht entlang der Schweißlinie und damit entlang der Längserstreckung des Überlappungsbereichs auf. Insbesondere zählt hierzu auch das gepulste Schweißen, bei dem nur in bestimmten Zeitintervallen ein Schweißvorgang erfolgt, während die Schweißapparatur die Schweißlinie entlang fährt. Hierbei entsteht eine unterbrochene Schweißnaht, die nur partiell mit der Schweißlinie zusammenfällt.

Die Schweißlinie, entlang derer das Schweißen der Metallfolien erfolgt, kann insbesondere einen periodischen Verlauf entlang der Längserstreckung des Überlappungsbereichs der Metallfolien aufweisen. Hierbei kann der Verlauf der Schweißnaht beispielhaft sinusförmig, mäanderförmig, zickzackförmig oder treppenförmig sein. Durch die Periodenlänge der Schweißnaht wird hierbei auch die maximale Länge der offenen Bereiche zwischen Metallfolien in ihrem Überlappungsbereich in Richtung der Längsrichtung des Überlappungsbereichs bestimmt, d.h. die maximale Länge der nicht durchgehenden Leckagekanäle entlang der Schweißnaht. Damit wird auch vorgegeben, daß Dichtungen, die aus den erfindungsgemäßen Schichtverbunden gefertigt werden, eine Dichtungsbreite D aufweisen müssen, die größer als die Periodenlänge der Schweißnaht ist, um keine offenen Leckagekanäle aufzuweisen. Daher wird bei einem periodischen Verlauf der Schweißnähte die Periodenlänge üblicherweise kleiner als 25 mm gewählt. Bevorzugt wird beim Verschweißen mit periodischem Verlauf der Schweißnaht eine Periodenlänge zwischen 0,5 und 5 mm gewählt, besonders bervorzugt werden Periodenlängen zwischen 1 und 2 mm. Ebenfalls ist es möglich, daß die Periodenlänge beim Verschweißen der Metallfolien mittels Schweißnähten mit periodischem Verlauf entlang des Überlappungsbereichs variiert.

Bevorzugt werden gemäß der vorliegenden Erfindung die Metallfolien in Bahnen kontinuierlich mit einer konstanten Geschwindigkeit relativ zu einer stationären Schweißapparatur bewegt. Die Schweißung der Metallfolien kann im Rahmen der vorliegenden Erfindung mit allen geeigneten, bekannten Schweißverfahren beispielweise Widerstandsschweißen oder Laserstrahlschweißen durchgeführt werden. Das Schweißen erfolgt jedoch bevorzugt mit Laserstrahl. Die Schweißnaht ist also bevorzugt eine Laserschweißnaht. Das Laserstrahlschweißen erfolgt bevorzugt in der Weise, daß der Laserstrahl oszillierend von einer Mittellinie abgelenkt wird. Durch die Wahl der Amplitude, der Frequenz, der Fokuslage und der Leistung des Laserstrahls und der Bahngeschwindigkeit der Metallfolien kann der Verlauf, die Dicke, die Quererstreckung, d.h. die maximale Gesamterstreckung der Schweißlinie senkrecht zur Längserstreckung des Überlappungsbereichs, und die Periodenlänge der Schweißnaht eingestellt werden. Eine weitere Gestaltung ist dadurch möglich, daß kontinuierlich oder pulsierend geschweißt wird.

Die Metallfolien werden vor dem Verschweißen zumindest partiell überlappend angeordnet. Die Breite des Überlappungsbereiches sollte hierbei über die gesamte Folienbahnlänge in etwa gleich groß sein. Durch äußere Einflüsse wie Temperaturschwankungen und/oder Erschütterungen oder andere Einflüsse kann die Breite des Überlappungsbereiches der Metallfolien abschnittsweise variieren. Es kann auch vorkommen, daß die Metallfolien in einem Abschnitt nur stumpf aneinander liegen. Die Metallfolien würden sich dann nur partiell überlappen. Bei den erfindungsgemäßen metallverstärkten Schichtverbunden kann damit die Verbindung der einzelnen Metallfolien, die gemeinsam eine Metalleinlage bilden, so ausgeführt sein, daß sich die Metallfolien in ihren aneinanderliegenden Randbereichen teilweise oder vollständig überlappen und die Folienenden auch teilweise direkt aneinander stoßen. Die maximale Breite des Überlappungsbereichs der Folien wird üblicherweise kleiner als 10 mm gewählt. Vorzugsweise sollte die maximale Breite des Überlappungsbereichs zwischen 0,2 mm und 2 mm liegen, besonders bevorzugt zwischen 0,5 mm und 1 mm.

Gemäß der Erfindung ist es auch möglich, daß die Metallfolien zunächst mechanisch verklammert werden und dann erst das erfindungsgemäße Verschweißen durchgeführt wird. Hierdurch werden dann alle durch das Verklammern entstandenen Leckagekanäle unterbrochen.

Gemäß der vorliegenden Erfindung ist die Quererstreckung der Schweißnaht, u.a. auch bei einem periodischen Verlauf der Schweißnaht, größer oder gleich der maximalen Breite des Überlappungsbereiches. Bevorzugt beträgt die Quererstreckung der Schweißnaht 1 bis 2 mal, besonders bevorzugt 1,1 bis 1,5 mal die maximale Breite des Überlappungsbereiches der Metallfolien. Um eine derartige Schweißnaht zu erzeugen, muß die Summe der Quererstreckung der Schweißlinie plus der Breite der Scheißnaht beim Schweißen ebenfalls größer oder gleich oder bevorzugt 1 bis 2 mal und besonders bevorzugt 1,1 bis 1,5 mal die maximale Quererstreckung des Überlappungsbereiches der Metallfolien betragen.

Bei einer beispielsweise sinusförmigen periodischen Schweißnaht ist die Quererstreckung der Schweißnaht bei Durchführung des erfindungsgemäß bevorzugten Laserstrahlschweißverfahrens gleich der Quererstreckung der Schweißlinie, d.h. der Auslenkungsamplitude, plus der Breite der Schweißnaht. Bei einer linearen Schweißnaht entspräche die Quererstreckung der Schweißnaht gleich der Breite der Schweißnaht.

Wird bei den erfindungsgemäßen metallverstärkten Schichtstoffen das Verschweißen der Metallfolien, die die Metalleinlagen bilden, ganz oder teilweise im Pulsbetrieb durchgeführt, so ist zur Unterbindung von Leckagekanälen im Überlappungsbereich der Metallfolien entlang der Längsrichtung des Überlappungsbereiches die Breite der einzelnen Schweißpunkte so zu wählen, daß sie sich mindestens zum Teil in ihrer Erstreckung überlappen. Der Pulsbetrieb des Lasers kann, z.B. bei konstantem Pulstakt und gleichmäßigem Vorschub der Metallfolien gegenüber dem Schweißapparat, zu Schweißpunkten entlang der Schweißlinie führen, die sich in einem konstanten Abstand zueinander entlang der Längserstreckung des Überlappungsbereiches befinden. Die Schweißlinie selber kann z.B. wie oben beschrieben einen periodischen Verlauf aufweisen. Hierbei z.B. wie auch bei anderen Schweißlinien, die die erfindungsgemäßen metallverstärkten Schichtverbunde aufweisen, sind einzelne aufeinanderfolgende Schweißpunkte in Richtung der Breite des Überlappungsbereichs gegeneinander versetzt. Da sich hierbei die einzelnen Schweißpunkte überlappen, bilden diese einzelnen Schweißpunkte in diesem Fall eine Schweißnaht, die sich über die gesamte Breite des Überlappungsbereichs erstreckt. Insbesondere kann dieses Verschweißen der Metallfolien so erfolgen, daß aufeinanderfolgende Schweißpunkte im Wechsel in Richtung der Breite des Überlappungsbereichs auf der einen und anderen Seite positioniert sind, daß also der Schweißapparat von Schweißpunkt zu Schweißpunkt über die ganze Breite des Überlappungsbereichs hin- und her pendelt.

Erfindungsgemäß kann die Schweißnaht insbesondere auch aus einzelnen Punkten bestehen, deren Durchmesser größer oder gleich der maximalen Breite des Überlappungsbereiches der Metallfolien ist. Dies kann beispielsweise durch Widerstandspunktschweißen oder pulsierendes Laserstrahlschweißen erfolgen.

Erfindungsgemäß kann die Dicke der Schweißnaht beispielsweise beim Punktschweißen größer oder gleich oder etwa 1 bis 2 mal der maximalen Breite des Überlappungsbereiches der Metallfolien sein. Bevorzugt beträgt die Dicke der Schweißnaht jedoch 0,25 bis 0,9 mm und besonders bevorzugt 0,4 bis 0,7 mm.

Gemäß der vorliegenden Erfindung kann die Schweißnaht auch einen linearen, zur Längserstreckung des Überlappungsbereiches der Metallfolien parallelen Verlauf aufweisen. Das Schweißen einer derartigen Schweißnaht erfolgt dann ebenfalls entlang einer linearen zur Längserstreckung des Überlappungsbereiches der Metallfolien parallelen Schweißlinie. Sind bei einem erfindungsgemäßen Schichtverbund zwei Metallfolien mindestens zum Teil nur durch eine derartige Schweißnaht verbunden, so muß die Breite dieser einen Schweißnaht größer als die maximale Breite des Überlappungsbereichs sein. Diese in einem Schweißvorgang hergestellte Schweißnaht weist eine flächige Gestalt auf, wobei der Überlappungsbereich der Metallfolien vollständig verschweißt wird. Eine derartige Form der Schweißnaht kann andererseits auch dadurch erreicht werden, daß beispielsweise mit dem Laserstrahlschweißverfahren eine sinusförmige Schweißlinie gefahren wird, wobei die Pendelfrequenz so groß gewählt wird, daß sich die zeitlich aufeinander folgenden Nähte sehr nahe kommen bzw. berühren oder überlappen.

Die vorliegende Erfindung umfaßt auch Ausführungsformen bei denen die Metallfolien in folgender Weise miteinander verschweißt sind: (a) mehrere lineare in Längserstreckung des Überlappungsbereiches gerichtete, nebeneinanderliegende Schweißnähte, die sich überlappen, wobei die Gesamtbreite der resultierenden Gesamtschweißnaht größer oder gleich der maximalen Breite des Überlappungsbereiches ist, wobei das Verschweißen in mehreren Schweißvorgängen erfolgt, und (b) eine lineare Schweißnaht kombiniert mit mindestens einer Schweißnaht, die einen Verlauf aufweist, der in mindestens einem Punkt P eine Richtungskomponente senkrecht zur Längserstreckung des Überlappungsbereiches der Metallfolien aufweist, wobei diese Richtungskomponente der der letztgenannten Schweißnaht größer oder gleich der Breite des Überlappungsbereiches der Metallfolien im Punkt P ist.

Verfahrensweise (b) hat den Vorteil, daß sehr dünne Metallfolien miteinander verschweißt werden können. Zuerst werden die sich mindestens partiell überlappenden Metallfolien mit einer linearen Schweißnaht bei geringem Energieeintrag und daher verzugsarm verschweißt. Die vorhandenen Leckagekanäle werden nachfolgend beispielsweise mit einer sinusförmigen Schweißnaht geschlossen.

Erfindungsgemäß kann die verschweißte Metalleinlage aber auch mit mindestens einem Durchgang im Überlappungsbereich der Metallfolien versehen sein, wobei die Schweißnaht selber einer lineare Schweißlinie entlang der Längserstreckung des Überlappungsbereichs folgen kann oder auch jede Form aufweisen, wie sie bisher oben für die erfindungsgemäßen metallverstärkten Schichtverbunde beschrieben wurde. Dieser Durchgang ist größer oder mindestens gleich der maximalen Breite des Überlappungsbereiches der Metallfolien. Die Durchgänge werden durch die den Metalleinlagen anliegenden Weichstofflagen geschlossen, die die Öffnung des Duchgangs vollständig ausfüllen. Dieses Ausfüllen mit den gasdichten Weichstoffen führt dazu, daß keine Zwischenräume im Überlappungsbereich der Metallfolien im Bereich der Durchgänge bestehen. Somit werden mögliche durchgehende Leckagekanäle verhindert und die maximale Länge noch im Überlappungsbereich möglicher Leckagekanäle begrenzter Ausdehnung in Richtung der Längserstreckung des Überlappungsbereichs erstreckt sich von Durchgang zu Durchgang.

Bevorzugt werden die Metallfolien im Überlappungsbereich mit zahlreichen Durchgängen versehen, so daß der Überlappungsbereich in Abständen, bevorzugt konstanten Abständen, entlang des Überlappungsbereichs Durchgänge aufweist. Der maximale Abstand der Durchgänge entlang des Überlappungsbereichs ist üblicherweise maximal 25 mm und liegt bevorzugt im Bereich zwischen 1 mm und 10 mm, besonders bevorzugt im Bereich zwischen 2 und 5 mm. Hierbei kann die verschweißte Metalleinlage als Spießblech gefertigt werden, in dem auch außerhalb des Überlappungsbereiches Durchgänge in der Einlage durch beliebige Verfahren wie z.B. Stanzen oder Nadeln erzeugt werden. Bevorzugt werden die Durchgänge durch Nadelung von beiden Seiten der Metallfolien aus erzeugt.

Bevorzugt erfolgt zuerst die Schweißung der Metallfolien und dann die Schaffung der Durchgänge. Generell ist aber auch eine Umkehrung der Verfahrensschritte denkbar.

Die Dicken der Metallfolien betragen im Rahmen der vorliegenden Erfindung bevorzugt bis zu etwa 250 µm, weiter bevorzugt etwa 25 µm bis etwa 125 µm und besonders bevorzugt etwa 50 µm bis etwa 100 µm.

Metallfolien, die im Rahmen der vorliegenden Erfindung eingesetzt werden, bestehen bevorzugt aus Nickel- oder Eisenwerkstoffen. Sie bestehen besonders bevorzugt aus Stahl, Nickel, Ni-Basislegierungen oder Edelstählen wie Chrom-Nickel-Stählen.

Die Bahnbreite der Metallfolien, die miteinander verschweißt werden, beträgt bevorzugt ≥ 300 mm. Sie können aber auch jede andere beliebige Breite aufweisen. Es können zwei oder mehrere Metallfolien bzw. Metallfolien gleichzeitig oder nachfolgend miteinander verschweißt werden.

Die Metalleinlagen im Rahmen der vorliegenden Erfindung sind bevorzugt glatte Metallfolien oder Spießblech. Spießblech weist zahlreiche, vorzugsweise über die gesamte Fläche gleichmäßig verteilte Durchgänge auf, die durch Nadelung von einer oder beiden Seiten der Metallfolien aus erzeugt werden. Diese Durchgänge weisen vorzugsweise kronenförmige Fortsätze auf, die sich von der Oberfläche der Metallfolien aus weg erstrecken. Diese kronenförmige Fortsätze dienen dazu, weitere Lagen, beispielsweise Weichstoffolien durch Verzahnen mechanisch festzuhalten. Bevorzugt werden Nadeln mit einem quadratischen oder runden Querschnitt verwendet. Die Durchgänge besitzen dann auch eine quadratische oder runde Form.

Im Rahmen der vorliegenden Erfindung sind die Metalleinlagen mit mindestens einer Lage Weichstoff verbunden. Die erfindungsgemäßen metallverstärkten Schichtverbunde weisen bevorzugt mindestens zwei Lagen Weichstoff auf, in denen mindestens eine Metalleinlage eingebettet ist. In vorteilhafter Weise werden die Weichstoffe in Form von Weichstofflagen auf die Metalleinlagen aufgebracht, die bevorzugt beide Seiten der Metalleinlagen vollständig bedecken. Dies kann z.B. folgende Anordnungen umfassen: Weichstofflage/Metalleinlage/Weichstofflage oder Weichstofflage/Metalleinlage/ Weichstofflage/Metalleinlage/Weichstofflage.

Weichstoffe im Rahmen der vorliegenden Erfindung sind weiche, anpassungsfähige, gasdichte, zum Teil flexible Stoffe, die sich insbesondere dichtend an die Oberfläche der Metallfolien und der Schweißnähte anlegen. Weichstoffe sind beispielsweise expandierter Graphit, Glimmer und Polytetrafluorethylen (PTFE). Es können ein oder mehrere verschiedene Weichstoffe in einem erfindungsgemäßen metallverstärkten Schichtverbund angewendet werden.

Die Weichstoffe werden im Rahmen der vorliegenden Erfindung bevorzugt in Form von Weichstoffolien oder -laminaten eingesetzt. Diese Folien weisen vorzugsweise eine Dicke von etwa 0,2 bis 2,0 mm, besonders bevorzugt von etwa 0,5 bis 1,0 mm auf.

Besonders bevorzugt werden Folien aus expandiertem Graphit eingesetzt, die eine Dichte von etwa 0,7 bis etwa 1,4 g/cm³ aufweisen. Folien aus expandiertem Graphit besitzen eine hohe Temperatur- und Medienbeständigkeit.

Die metallverstärkten Schichtverbunden werden bevorzugt als Dichtungsplatten angewendet. Aus den erfindungsgemäßen Schichtverbunden bzw. Dichtungsplatten können Dichtungen beliebiger Form, z.B. durch Ausstanzen, hergestellt werden. Diese können Flachdichtungen, bevorzugt ringförmige Flanschdichtungen, oder ringförmige Stopfbuchspackungen sein.

Dichtungen aus den erfindungsgemäßen Schichtverbunden werden beispielsweise in der chemischen Industrie, in Kraftwerksanlagen und im Motorenbau z.B. als Zylinderkopfdichtungen und Stopfbuchspackungen zum Zweck der Abdichtung von Spindeln eingesetzt.

Die vorliegende Erfindung besitzt u.a. folgende Vorteile:

Dichtungen, die aus den erfindungsgemäßen metallverstärkten Schichtverbunden hergestellt sind, weisen, wenn das Verschweißen der Metallfolien in den Schichtverbunden den geometrischen Abmessungen der Dichtungen entsprechend ausgeführt wurde, zumindest im Bereich der Schweißnaht der Metalleinlagen zumindest keine durchgängigen Leckagekanäle auf und besitzen damit ähnlich oder gleich niedrige Leckageraten wie Dichtungen, die aus Schichtverbunden hergestellt wurden, die einteilige Metallfolien, d.h. Metallfolien ohne Störstellen aufweisen. Siehe hierzu auch die Beispiele und Vergleichsbeispiele.

Dadurch, daß die erfindungsgemäßen metallverstärkten Schichtverbunde großformatig hergestellt werden können, entstehen weniger Stanzverluste beim Herstellen von Dichtungen, und außerdem besteht die Möglichkeit der Anfertigung größerer Dichtungen z.B. ringförmiger Flachdichtungen mit einem Außendurchmesser von größer als 1 m, die qualitativ den bisher bekannten Dichtungen, die aus Schichtverbunden mit einteiligen Metalleinlagen gefertigt wurden, nicht nachstehen.

Die vorliegende Erfindung kann auch helfen Materialkosten zu sparen, da Metallfolienbahnen mit geringerer Breite im Einkauf kostengünstiger sein können oder besser verfügbar als Metallfolienbahnen mit größeren Breiten.

Ferner betrifft die Erfindung die Verwendung von Metallfolien, die mindestens zwei sich mindestens partiell überlappenden Metallfolien bestehen, die durch mindestens eine Schweißnaht in dem Überlappungsbereich miteinander verbunden sind, dadurch gekennzeichnet, daß an der mindestens einen Schweißnaht im Überlappungsbereich zwischen den Metallfolien keine und/oder keine in Längserstreckung des Überlappungsbereichs durchgehenden offenen Bereiche vorhanden sind, die beim Einsatz dieser in Metallfolien in einem Schichtstoff als Leckagekanäle in Längserstreckung des Überlappungsbereiches wirken. Diese Metallfolien können entsprechend den verschweißten Metalleinlagen der erfindungsgemäßen metallverstärkten Schichtverbunde verschweißte Metallfolien aufweisen und entsprechende Durchgänge aufweisen. Die erfinderische Verwendung bezieht sich auf die Verwendung zur Herstellung von metallverstärkten Schichtverbunden, Dichtungsplatten, Dichtungen und insbesondere Flachdichtungen aus mindestens einem Weichstoff.

Es soll nun mit den folgenden Figuren und beispielhaft anhand von Dichtungsplatten die vorliegende Erfindung näher erläutert werden.
- Fig. 1: zeigt ein Schliffbild von glatten 50 µm dicken Metallfolien, die gemäß des Standes der Technik überlappt und mit einer linearen Schweißnaht verbunden wurden. Hiermit werden die auftretenden Leckagekanäle dargestellt.
- Fig. 2: zeigt einen Aufriß eines metallverstärkten Schichtverbunds 1 gemäß des Standes der Technik.
Fig. 2a stellt einen Aufriß dar.
Fig. 2b zeigt einen Schnitt entlang der Linie IIb-IIb durch die Dichtungsplatte 1 gemäß Fig. 2a.
- Fig. 3: zeigt eine Ausführungsform einer metallverstärkten Dichtungsplatte 11 gemäß der vorliegenden Erfindung.
Fig. 3a stellt einen Aufriß dar.
Fig. 3b zeigt einen Schnitt durch die Dichtungsplatte 11 gemäß Fig. 3a entlang der Linie IIIb-IIIb.
Fig. 3c zeigt einen Schnitt durch die Dichtungsplatte 11 gemäß Fig. 3a entlang der Linie IIIc-IIIc, die um eine halbe Periodenlänge der Schweißnaht 16 zur Linie IIIb-IIIb versetzt liegt.
- Fig. 4: zeigt eine Metalleinlage 12 mit einer möglichen Schweißlinie gemäß der vorliegenden Erfindung.
Fig. 4a zeigt eine Draufsicht.
Fig. 4b stellt einen Ausschnitt aus dem in Fig. 4a dargestellten Schweißnaht verlauf dar.
- Fig. 5 u.6: zeigen weitere Draufsichten auf Metalleinlagen 12 mit möglichen Schweißlinienverläufen gemäß der vorliegenden Erfindung.
- Fig. 7: zeigt eine Ausführungsform einer metallverstärkten Dichtungsplatte 11 entgegen der Lehre der vorliegenden Erfindung
Fig. 7a stellt eine Draufsicht dar.
Fig. 7b ist ein Querschnitt durch die metallverstärkte Dichtungsplatte gemäß Fig. 7a entlang der Linie VIIb-VIIb.
- Fig. 8: zeigt eine Ausführungsform einer metallverstärkten Dichtungsplatte 11 gemäß der vorliegenden Erfindung.
Fig. 8a stellt eine Draufsicht dar.
Fig. 8b ist ein Querschnitt durch die metallverstärkte Dichtungsplatte der Fig. 8a entlang der Linie VIIIb-VIIIb.
- Fig. 9: zeigt Flachdichtungen 24 gemäß der Beispiele und Vergleichsbeispiele der Beschreibung der vorliegenden Erfindung.

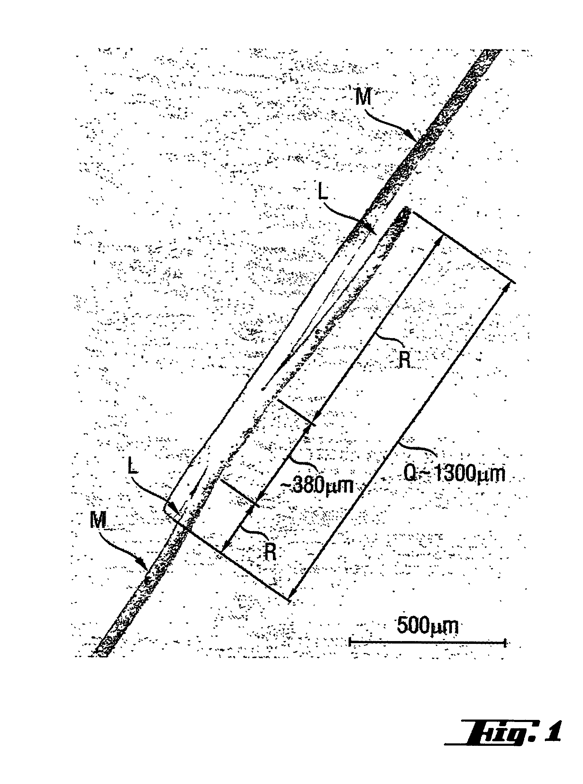

Fig. 1 zeigt ein Schliffbild von glatten Metallfolien, die gemäß des Standes der Technik überlappt mit einer linearen Schweißnaht verbunden wurden. Hierfür wurden zwei Metallfolien M einer Dicke von 50 µm überlappt angeordnet und mit einer Schweißnaht verbunden. Die Dicke der Schweißnaht beträgt in dem dargestellten Schnitt ungefähr 380 µm, die Breite Q des Überlappungsbereiches der Metallfolien M ungefähr 1300 µm (= 1,3 mm). Die Figur zeigt, daß es im Überlappungsbereich der Metallfolien M zu nicht verschweißten Metallfolienüberständen R kommt. Zwischen diesen Überständen R und den Metallfolien M sind Kanäle in Längserstreckung des Überlappungsbereiches der Metallfolien M vorhanden. Diese Kanäle werden aufgrund der schlechten Zugänglichkeit bei der Herstellung von beispielsweise Weichstoffdichtungsplatten nicht mit Weichstoff gefüllt. Es entstehen daher Leckagekanäle L, die zu einer Erhöhung der Leckageraten der Dichtungen führen, die aus diesen Dichtungsplatten hergestellt werden.

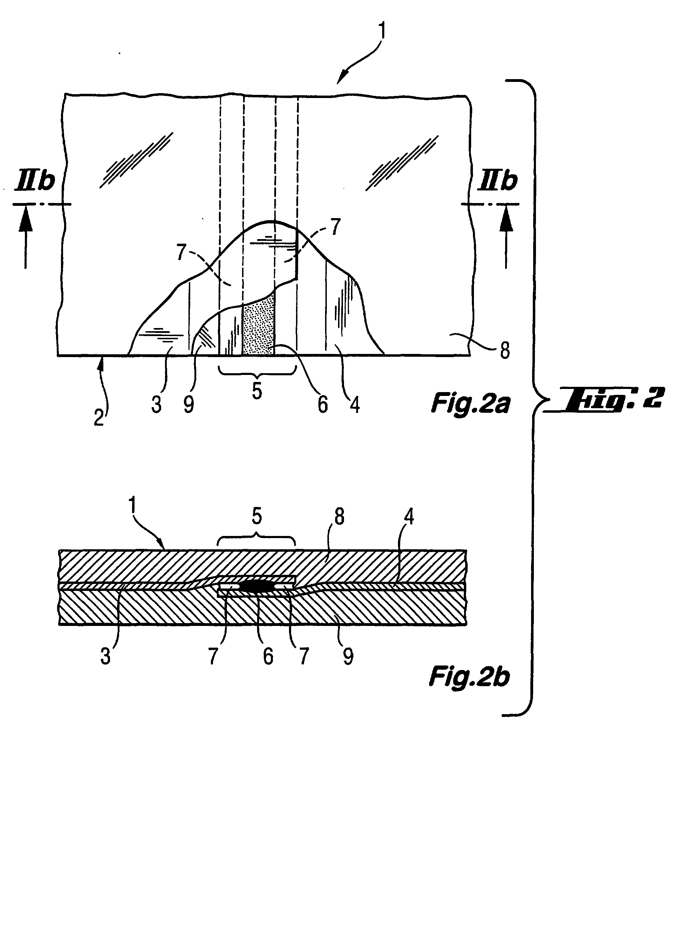

Fig. 2 (2a und 2b) zeigt einen metallverstärkten Schichtverbund 1 aus mindestens einem Weichstoff gemäß des Standes der Technik, der eine Metalleinlage 2 aufweist, die in zwei Lagen eines Weichstoffes 8 und 9 eingebettet ist. Diese Metalleinlage 2 besteht, wie im Aufriß der Fig. 2a gezeigt, aus zwei glatten Metallfolien 3 und 4, die in ihrem Überlappungsbereich 5 durch eine lineare Schweißnaht 6 miteinander verschweißt sind. Der Querschnitt in Fig. 2b entlang der in der Fig. 2a gekennzeichneten Linie IIb-IIb zeigt, daß bei dieser Ausführung Leckagekanäle 7 in Längserstreckung des Überlappungsbereiches 5 entstehen, die aufgrund ihrer schlechten Zugänglichkeit nicht durch die Weichstofflagen 8 und 9 abgedichtet werden. Diese Leckagekanäle 7 sind für die hohen Leckageraten von Dichtungen verantwortlich, die aus derartigen Schichtverbunden 1 als Dichtungsplatten gefertigt werden.

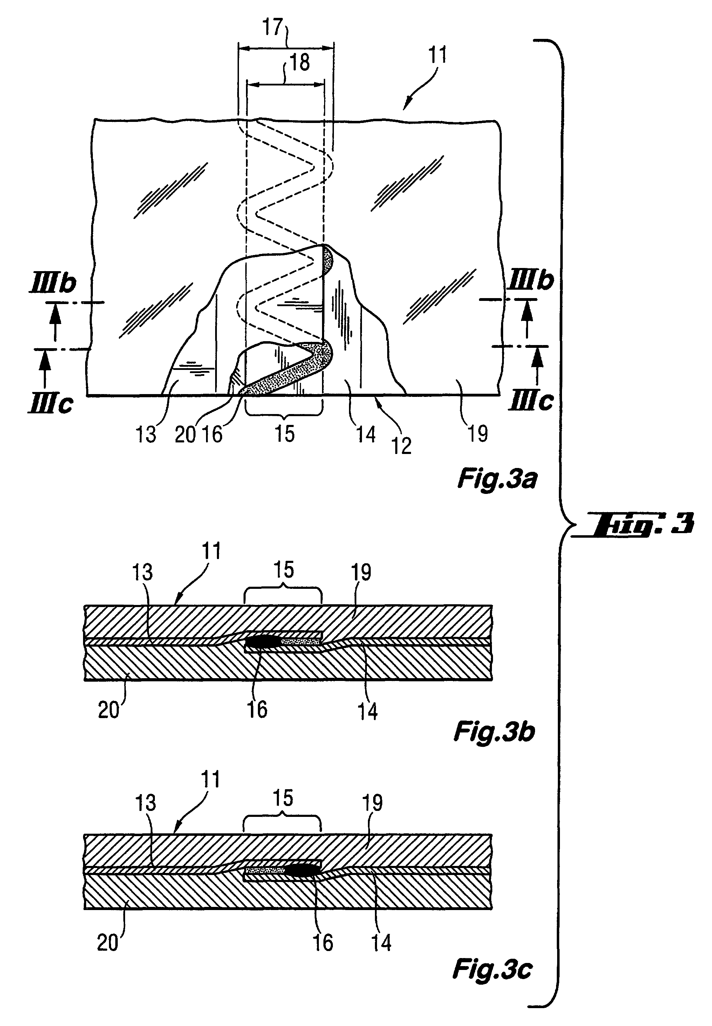

Fig. 3 zeigt eine Ausführungsform eines metallverstärkten Schichtverbundes 11 aus mindestens einem Weichstoff gemäß der vorliegenden Erfindung. Fig. 3a stellt eine Draufsicht auf den metallverstärkten Schichtverbund 11 dar. Der metallverstärkte Schichtverbund 11 weist eine Metalleinlage 12 auf, die in zwei Lagen eines Weichstoffes 19 und 20, beispielsweise aus expandiertem Graphit, eingebettet ist. Die Metalleinlage besteht aus zwei Metallfolien 13 und 14, die durch eine zickzackförmige Laserstrahlschweißnaht 16 im Überlappungsbereich 15 miteinander verschweißt sind. Die Quererstreckung 17 der Schweißnaht 16 ist größer als die maximale Breite 18 des Überlappungsbereiches der beiden Metallfolien 13 und 14. Der metallverstärkte Schichtverbund 11 wird erfindungsgemäß so hergestellt, daß die Metallfolien in Bahnen miteinander verschweißt, dann in Platten geschnitten und anschließend mit den Weichstofflagen 19 und 20 versehen werden. Die Fig. 3b zeigt einen Querschnitt durch den metallverstärkten Schichtverbund aus Fig. 3a entlang der Linie IIIb-IIIb. Der Querschnitt zeigt, daß die Metalleinlage 12 zwischen den Weichstofflagen 19 und 20 eingebettet ist. Die Metallfolien 13, 14 bilden in diesem Querschnitt in der linken Hälfte des Überlappungsbereiches keine Metallfolienüberstände, da sie hier durch die Schweißnaht 16 miteinander verbunden sind. In der rechten Hälfte des Überlappungsbereiches sind die Metallfolien 13, 14 nicht miteinander verbunden, so daß hier ein offener Bereich im Überlappungsbereich zwischen den zu verbindenden Metallfolien vorliegt. Fig. 3c stellt einen Querschnitt entlang der Linie IIIc-IIIc durch den metallverstärkten Schichtverbund aus Fig. 3a dar. Die Linie IIIc-IIIc ist um eine halbe Periodenlänge der Schweißnaht 16 zu der Linie IIIb-IIIb versetzt. In diesem Schnitt sind die Metallfolien 13, 14 in der rechten Hälfte des Überlappungsbereiches 15 durch die Schweißnaht 16 miteinander verbunden, wohingegen sie in der linken Hälfte des Überlappunsbereichs unverbunden übereinanderliegen, so daß hier ein offener Bereich zwischen den Metallfolien im Überlappungsbereich vorliegt. Ein Vergleich der Fig. 3b und 3c zeigt, daß die entstehenden offenen Bereiche, die zu Leckagekanälen entlang der Längserstreckung des Überlappungsbereiches führen können, durch die Querführung der Schweißnaht über den gesamten Überlappungsbereich hinaus, periodisch in Richtung der Längserstreckung des Überlappungsbereiches unterbrochen werden, so daß die Erstreckung möglicher Leckagekanäle in Richtung der Längserstreckung des Überlappungsbereiches maximal der Periodenlänge der Schweißnaht entspricht. Der metallverstärkte Schichtverbund weist daher keine durchgehenden Leckagekanäle 7 in Längserstreckung des Überlappungsbereichs 15 der Metallfolien 13, 14 auf. Die vorliegende Ausführungsform eines metallverstärkten Schichtverbundes 11 gemäß der Fig. 3 kann erfindungsgemäß auch dahingehend abgewandelt werden, daß die Metalleinlage 12 nach dem Schweißen genadelt wird, um ein Spießblech zu erhalten, auf das nachfolgend die Weichstofflagen 19 und 20 aufgebracht werden.

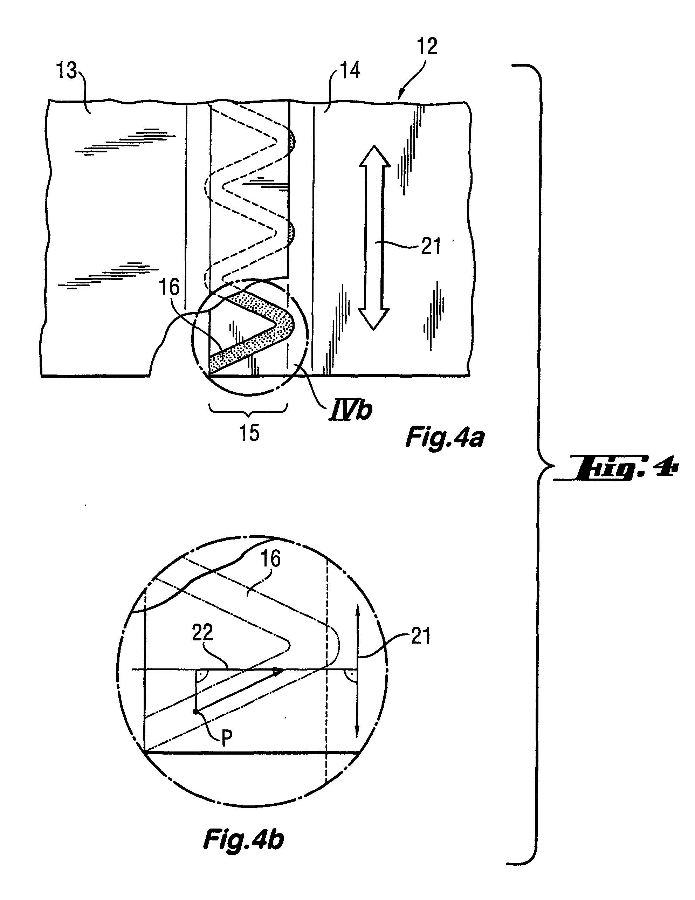

Anhand der Fig. 4 (4a und 4b) soll ein möglicher Verlauf der Schweißnaht 16 der vorliegenden Erfindung näher erläutert werden. In Fig. 4a ist eine Metalleinlage 12 eines metallverstärkten Schichtverbundes 11 gemäß der vorliegenden Erfindung dargestellt. Die Metalleinlage 12 besteht aus zwei sich überlappenden Metallfolien 13, 14, die durch eine zickzackförmige Schweißnaht 16 im Überlappungsbereich 15 miteinander verschweißt sind. Der Pfeil 21 gibt an, was unter der Längserstreckung des Überlappungsbereiches 15 der Metallfolien 13, 14 zu verstehen ist. Fig. 4b stellt einen Ausschnitt aus der Fig. 4a dar. In Fig. 4b sind die Grenzen des Überlappungsbereiches in Form der parallelen Striche und die Schweißnaht 16 ausschnittsweise dargestellt. Dieser Ausschnitt zeigt, daß die Schweißnaht 16 einen Verlauf aufweist, der in mindestens einem Punkt P eine Richtungskomponente 22 senkrecht zur Längserstreckung 21 des Überlappungsbereiches der Metallfolien aufweist. Das Schweißen erfolgt in diesem Ausführungsbeispiel kontinuierlich. Dies bedeutet, daß die Schweißnaht in ihrem gesamten Verlauf mit der Schweißlinie, entlang derer das Schweißen erfolgt, übereinstimmt.

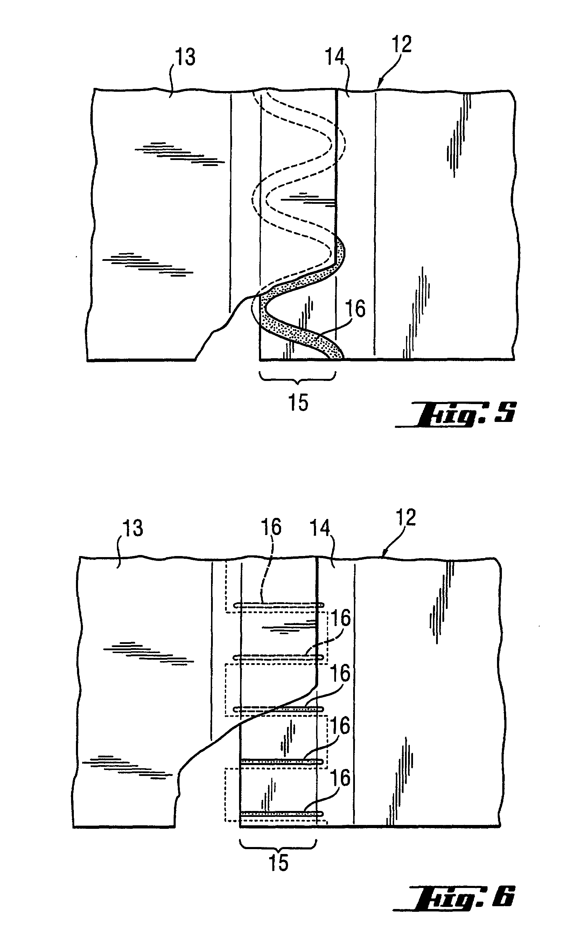

Die Fig. 5 zeigt zwei Metallfolien 13, 14, die durch eine Schweißnaht mit sinusförmiger Schweißlinie im Überlappungsbereich 15 gemäß der vorliegenden Erfindung miteinander verbunden sind. Die verschweißten Metallfolien 13, 14 bilden die Metalleinlage 12. Auch hier erfolgte das Schweißen kontinuierlich.

Fig. 6 zeigt eine Metalleinlage 12 gemäß der vorliegenden Erfindung. Die Metallfolien 13, 14 sind im Überlappungsbereich 15 mit einer Schweißnaht 16 mit einer leitersprossenförmigen Schweißlinie (nicht unterbrochene Strichführung) verschweißt. Das Schweißen erfolgte hierbei diskontinuierlich, insbesondere gepulst. Die Linie entlang derer das Schweißen erfolgte ist dahingegen mäanderförmig (gestrichelte Strichführung). Der Versatz zwischen der nicht unterbrochenen und der gestrichelten Strichführung ist durch die Darstellung bedingt. Sie liegen tatsächlich übereinander.

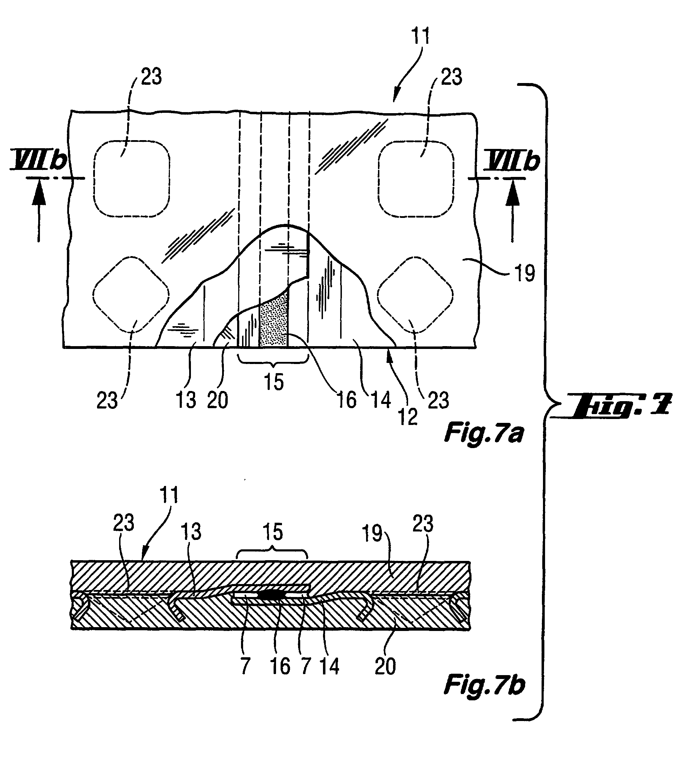

Fig. 7 zeigt einen metallverstärkten Schichtverbund 11 aus mindestens einem Weichstoff mit einer Metalleinlage 12 entgegen der Lehre der vorliegenden Erfindung. Fig. 7a zeigt einen Aufriß des Schichtverbundes 11. Die Metallfolien 13 und 14 sind durch einer linearen Schweißnaht 16 im Überlappungsbereich 15 miteinander verbunden. Nach dem Verschweißen wurde die Metalleinlage 12 genadelt, um ein Spießblech zu schaffen. Die Nadelung wurde so durchgeführt, daß keine Durchgänge 23 im Überlappungsbereich 15 der Metallfolien 13 und 14 entstanden. Der Schnitt entlang der Linie VIIb-VIIb in Fig. 7b zeigt, daß bei diesem Schichtverbund 11 durchgehende Leckagekanäle 7 in Richtung der Längserstreckung des Überlappungsbereiches 15 der Metallfolien 13, 14 vorhanden sind, die direkt neben der Schweißnaht verlaufen.

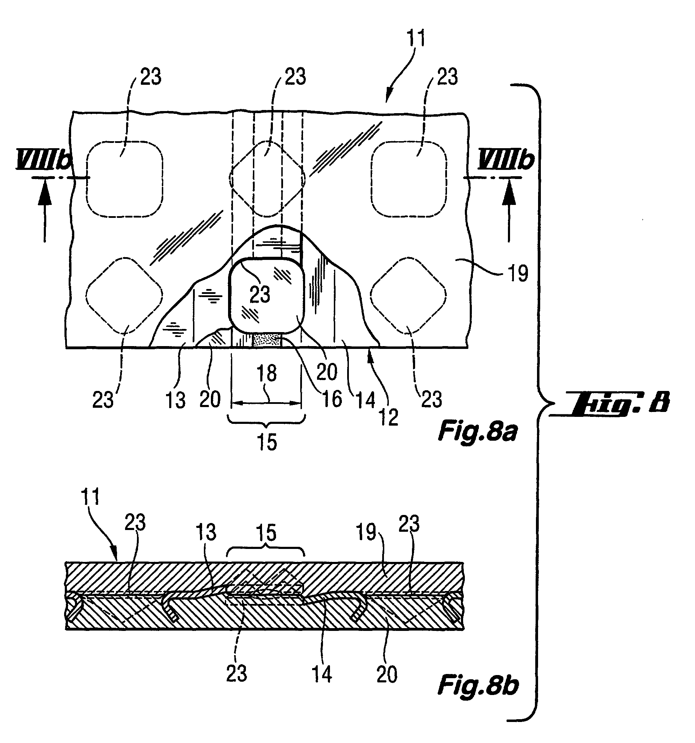

Fig. 8 zeigt einen metallverstärkten Schichtverbund 11 aus mindestens einem Weichstoff gemäß der vorliegenden Erfindung. Fig. 8a stellt einen Aufriß der Dichtungsplatte 11 dar. Die Metalleinlage 12 besteht aus zwei Metallfolien 13 und 14, die mit einer linearen Schweißnaht 16 im Überlappungsbereich 15 der Metallfolien 13, 14 miteinander verbunden sind. Die anschließende Nadelung zur Schaffung eines Spießbleches wurde so durchgeführt, daß im Überlappungsbereich 15 Durchgänge 23 vorhanden sind. Die Durchgänge 23 sind größer oder gleich der maximalen Breite 18 des Überlappungsbereiches 15. Bei dem nachfolgenden Aufbringen der Weichstofflagen 19, 20 werden die Durchgänge 23 mit Weichstoff gefüllt. Dies zeigt Fig. 8b, die einen Querschnitt durch den Schichtverbund der Fig. 8a entlang der Linie VIIIb-VIIIb darstellt. Eventuell vorhandene Kanäle in Längserstreckung des Überlappungsbereiches 15 werden durch die mit Weichstoff gefüllten Durchgänge 23 im Bereich der Durchgänge unterbrochen. Es können keine durchgehenden Leckagekanäle entstehen. Die Länge der nichtdurchgehenden Leckagekanäle in Längserstreckung des Überlappungsbereiches reicht maximal von Durchgang zu Durchgang.

Fig. 9 zeigt eine ringförmige Flachdichtung 24 gemäß der Beispiele und Vergleichsbeispiele der Beschreibung der vorliegenden Erfindung. Derartige Dichtungen werden in der Weise aus den Dichtungsplatten ausgestanzt, daß der Überlappungsbereich 15 der Metallfolien z.B. in der dargestellten Position liegt. Mit D ist die Dichtungsbreite der Dichtung bezeichnet. Damit eine derartige Dichtung trotz der Schweißnähte keine Leckageraten aufweisen, die größer als die Leckageraten von Dichtungen, die nur einteilige Metalleinlagen aufweisen, sind, ist die Verschweißung der Metallfolien der Metalleinlage und/oder das Anbringen von Durchgängen im Überlappungsbereich der Metallfolien so aufzuführen, daß die Erstreckung möglicher verbleibender offener Bereiche zwischen den Metallfolien im Überlappungsbereich in Längsrichtung des Überlappungsbereichs der Metallfolien kleiner als die Dichtungsbreite D ist.

Die vorliegende Erfindung wird nun anhand der folgenden Beispiele und beispielhaft anhand von Schichtverbunden näher erläutert:

### Beispiel 1:

Zwei 50 µm dicke, glatte Edelstahlfolien (Werkstoff-Nr. 1.4401) mit einer Breite von 540 bzw. 1000 mm wurden von zwei gebremsten mit optischen Seitenkantensteuerungseinheiten ausgestatteten Abwickeleinheiten abgezogen. Die beiden Metallfolienbahnen wurden kontinuierlich mit einer Überlappung von ca. 1 ± 0,75 mm über eine Bronzewalze geführt. Durch die aufgebrachte Bahnspannung wurden die beiden Folien übereinander gepreßt und in dem Überlappungsbereich im Fokuspunkt eines Nd-YAG-Laserstrahls (Firma Rofin Sinar, Günding: Typ RSY 300P1/CW) verschweißt. Der Laserstrahl wird dabei mit der Hilfe eines Pendelspiegels senkrecht zum Überlappungsbereich ausgelenkt. Die Schwingamplitude des Laserstrahls betrug 1 mm. Die Nullage des Laserstrahls war mit der Mittellinie des Überlappungsbereichs identisch. Die Bahngeschwindigkeit war 0,9 m/min, die Pendelfrequenz der Laserstrahlauslenkung betrug 12 Hz, der Schweißstrom (Lampenstrom) wurde auf 25 A eingestellt. Die so entstandene zickzackförmige Schweißnaht, wie z.B. in Fig. 4a dargestellt, die die Metallfolien in ihren Überlappungsbereich verband, hatte eine Periodenlänge von 1,25 mm, die Breite der Schweißnaht betrug ca. 0,5 mm. Die so verschweißte Metallfolienbahn wurde im Anschluß daran auf eine Breite von 1500 mm randbesäumt und mit einer drehmomentgesteuerten Wickelvorrichtung aufgespult. Mit den derart verschweißten Metalleinlagen wurde unter Anwendung des in EP 0 616 884 B1 beschriebenen Verfahrens ein metallfolienverstärkter Schichtverbund auf der Basis von Graphitfolie als Dichtungsplatte hergestellt. Diese metallverstärkte Dichtungsplatte bestand dabei aus 4 Lagen von 0,5 mm dicker Graphitfolie der Dichte 1,1 g/cm³ und drei Metallfolienlagen. Die Abfolge der Schichten war dabei Graphitfolie/ geschweißte Metallfolie/Graphitfolie/einteilige Metallfolie/ Graphitfolie /geschweißte Metallfolie/Graphitfolie.

Aus dieser Dichtungsplatte wurden Flachdichtungen entsprechend der in Fig. 9 dargestellten Lagebeziehung ausgestanzt, um im Anschluß daran nach DIN 28090-1 die Leckageraten der Dichtungen zu bestimmen. Die Meßergebnisse können der Tabelle 1 entnommen werden.

### Vergleichsbeispiel 1/1:

Es wurde ein metallverstärkter Schichtverbund auf der Basis von Graphitfolie gemäß Beispiel 1 als Dichtungsplatte hergestellt, wobei jedoch alle drei Metallfolien einteilig waren.

Aus dieser Dichtungsplatte wurden analog zu Beispiel 1 Flachdichtungen ausgestanzt und deren Leckageraten nach DIN 28090-1 bestimmt (s. Tabelle 1).

### Vergleichsbeispiel 1/2:

Es wurde ein metallverstärkter Schichtverbund auf der Basis von Graphitfolie gemäß Beispiel 1 als Dichtungsplatte hergestellt, wobei jedoch die geschweißten Metallfolien keine zickzackförmige Naht, sondern eine lineare Schweißnaht aufwiesen. Die Schweißung erfolgte analog zu dem in Beispiel 1 beschriebenen Verfahren, wobei die Schwingamplitude der Laserstrahlauslenkung jedoch zu 0 gestellt wurde.

Wiederum wurden analog zu Beispiel 1 aus dieser Dichtungsplatte Flachdichtungen ausgestanzt und deren Leckageraten gemäß DIN 28090-1 bestimmt (s. Tabelle 1).

**Tabelle 1:**

| Leckageraten der Flachdichtungen gemäß Beispiel 1, Vergleichsbeispiel 1/1 und Vergleichsbeispiel 1/2 | | | |
|---|---|---|---|
| | **Beispiel 1** | **Vergleichsbeispiel 1/1** | **Vergleichsbeispiel 1/2** |
| **Metallfolien** | 1 mal einteilig; 2 mal mit einer zickzackförmigen Schweißnaht | 3 mal einteilig | 1 mal einteilig; 2 mal mit linearer Schweißnaht |
| **Leckagerate nach DIN 28090-1 [mg/ (m·s)]** | 0,07 - 0,1 | 0,07 - 0,1 | 2,5 - 48 |

Aus Tabelle 1 ist ersichtlich, daß die Dichtungen, die aus Dichtungsplatten gefertigt wurden, die eine einteilige und aus zwei durch zickzackförmige Schweißnähte verbundenen Metallfolien bestehenden Metalleinlagen aufwiesen, gleich niedrige Leckageraten aufwiesen, wie die Dichtungen, die aus Dichtungsplatten mit ausschließlich einteiligen Metalleinlagen gefertigt wurden.

Dichtungen, die aus Dichtungsplatten gefertigt wurden, die eine einteilige und aus zwei durch lineare Schweißnähte verbundenen Metallfolien bestehenden Metalleinlagen beinhalteten, wiesen dagegen mehr als zehn mal höhere Leckageraten auf.

### Beispiel 2:

In diesem Beispiel wurden 0,1 mm dicke Metallfolien verwendet. Die Schweißparameter der zickzackförmigen Schweißnaht waren: Schwingfrequenz 12 Hz, Lampenstrom 31 A, Pendelschwingbreite ca. 1,3 mm. Die Bahngeschwindigkeit betrug 1,8 m/min, die Breite des Überlappungsbereichs der Folien schwankte zwischen ca. 0,4 und 1,5 mm. Die verschweißten Metallfolien wurden anschließend genadelt, so daß ein Spießblech zur Verfügung stand. Durch einen Preßvorgang wurde ein Schichtverbund mit der Schichtabfolge Graphitfolie (Dicke 1 mm, Dichte 1,0 g/cm³)/geschweißtes Spießblech/Graphitfolie (Dicke 1 mm, Dichte 1,0 g/cm³) als Dichtungsplatte mechanisch verbunden. Zu den weiteren Verfahrensbedingungen siehe Beispiel 1, sofern sie nicht mit den hier genannten in Widerspruch stehen.

Aus dieser Dichtungsplatte wurden analog zu Beispiel 1 Flachdichtungen ausgestanzt und die Leckageraten gemäß DIN 28090-1 bestimmt (s. Tabelle 2).

### Vergleichsbeispiel 2/1:

Es wurde eine Dichtungsplatte wie in Beispiel 2 beschrieben hergestellt, wobei jedoch die Spießblecheinlage einteilig war. Wiederum wurden Flachdichtungen ausgestanzt und Leckageraten gemessen (s. Tabelle 2).

### Vergleichsbeispiel 2/2:

Es wurde eine Dichtungsplatte wie in Beispiel 2 beschrieben hergestellt, wobei jedoch die Spießblecheinlage eine lineare Schweißnaht aufwies, wie in Fig. 7 dargestellt. Das Spießblech wies also keine Durchgänge im Überlappungsbereich der Metallfolien auf. Die Leckageraten der Flachdichtungen, die aus dieser Dichtungsplatte ausgestanzt wurden, können ebenfalls der Tabelle 2 entnommen werden.

### Beispiel 2/3:

Es wurde eine Dichtungsplatte wie in Beispiel 2 beschrieben hergestellt, wobei jedoch die Spießblecheinlage eine lineare Schweißnaht, wie in Fig. 8 gezeigt, aufwies. Das Spießblech wies also Durchgänge im Überlappungsbereich der Metallfolien auf, die den gesamten Überlappungsbereich überdeckten. Die Leckageraten der Flachdichtungen, die aus dieser Dichtungsplatte ausgestanzt wurden, sind auch in der Tabelle 2 dargestellt.

**Tabelle 2:**

| Leckageraten der Flachdichtungen gemäß Beispiel 2, Vergleichsbeispiel 2/1, Vergleichsbeispiel 2/2 und Beispiel 2/3. | | | | |
|---|---|---|---|---|
| | **Beispiel 2** | **Vergleichsbeispiel 2/1** | **Vergleichsbeispiel 2/2** | **Beispiel 2/3** |
| **Spießblech** | mit zickzackförmiger Schweißnaht | einteilig | mit linearer Schweißnaht, keine Durchgänge im Überlappungsbereich | mit linearer Schweißnaht und Durchgängen im Überlappungsbereich |
| **Leckagerate nach DIN 28090-1 [mg/(m·s)]** | 0,07 - 0,11 | 0,08 - 0,10 | 2,0 - 26 | 0,09 - 0,11 |

Tabelle 2 zeigt, daß die ermittelten Leckageraten der Flachdichtungen mit der zickzackförmigen Schweißnaht oder der linearen Schweißnaht mit Durchgängen im Überlappungsbereich der Metallfolien im wesentlichen identisch mit den Leckageraten der einteilig spießblechverstärkten Flachdichtungen waren.

An den Dichtungsproben mit der linear geschweißten Spießblecheinlage, die entgegen der Lehre der vorliegenden Erfindung keine Durchgänge im Überlappungsbereich der Metallfolien aufwies, erhielt man hingegen Leckageraten, die um ein Vielfaches höher waren.

Die Messung der Leckageraten erfolgten bei allen voranstehenden Beispielen nach DIN 28090-1 entsprechend den Prüfvorschriften für den Vorversuch gemäß Kapitel 7.3.3. Entsprechend der Tabelle 11 der voranstehenden DIN-Norm wurden die Leckageraten der Dichtungsplatten bei einer Dichtflächenpressung nach Innendruckentlastung von 30 N/mm² und einem Prüfdruck von 40 bar Stichstoffgas durchgeführt. Probennahme, Probenabmessungen und Probenvorkonditionierung sowie Prüfgerät entsprachen der DIN-Norm 28090-1. Für jedes der voranstehenden Beispiele wurden 5 Proben geprüft.

### Bezugszeichenliste

- 1: metallverstärkter Schichtverbund (Dichtungsplatte)
- 2: Metalleinlage
- 3: Metallfolie
- 4: Metallfolie
- 5: Überlappungsbereich der Metallfolien 3 und 4
- 6: lineare Schweißnaht
- 7: Leckagekanal
- 8: Weichstofflage
- 9: Weichstofflage

- 11: metallverstärkter Schichtverbund (Dichtungsplatte)
- 12: Metalleinlage
- 13: Metallfolie
- 14: Metallfolie
- 15: Überlappungsbereich der Metallfolien 13 und 14
- 16: Schweißnaht
- 17: Quererstreckung der Schweißnaht 16
- 18: maximale Breite des Überlappungsbereiches 15
- 19: Weichstofflage
- 20: Weichstofflage
- 21: Längserstreckung des Überlappungsbereiches 15
- 22: Richtungskomponente der Schweißnaht 16 senkrecht zur Längserstreckung 21
- 23: Durchgang
- 24: Flachdichtung

- D: Dichtungsbreite
- L: Leckagekanal
- M: Metallfolie
- P: Punkt
- Q: Breite des Überlappungsbereiches
- R: Metallfolienüberstand

## Patentansprüche

1. Metallverstärkter Schichtverbund (11) aus einem oder mehreren Weichstoffen aufweisend mindestens eine Metalleinlage (12), wobei mindestens eine dieser Metalleinlagen (12) aus mindestens zwei sich mindestens partiell überlappender Metallfolien (13, 14) besteht, die durch mindestens eine Schweißnaht (16) und/oder Verklammern in dem Überlappungsbereich (15) miteinander verbunden sind,
**dadurch gekennzeichnet, daß**
an jeder im Schichtverbund (11) vorhandenen Schweißnaht (16), durch die zwei Metallfolien (13, 14) verbunden werden und in jedem Überlappungsbereich, wo zwei Metallfolien durch Verklammern verbunden sind, keine und/oder keine durchgehenden Leckagekanäle (7) in Längserstreckung (21) des Überlappungsbereiches (15) vorhanden sind.

2. Metallverstärkter Schichtverbund (11) nach Patentanspruch 1, wobei der Schichtverbund zusätzlich auf seinen nach außen weisenden Flachseiten vollständig mit einer gasdichten Folie aus einem organischen Polymer bedeckt und verbunden ist.

3. Metallverstärkter Schichtverbund (11) nach Patentanspruch 1 oder 2, wobei die maximale Länge eines nicht durchgehenden Leckagekanals in Längserstreckung (21) des Überlappungsbereiches (15) kleiner als 25 mm ist.

4. Metallverstärkter Schichtverbund (11) nach Patentanspruch 1 oder 2, wobei die maximale Länge eines nicht durchgehenden Leckagekanals in Längserstreckung (21) des Überlappungsbereiches (15) zwischen 0,5 und 5 mm liegt.

5. Metallverstärkter Schichtverbund (11) nach Patentanspruch 1 oder 2, wobei die maximale Länge eines nicht durchgehenden Leckagekanals in Längserstreckung (21) des Überlappungsbereiches (15) zwischen 1 und 2 mm liegt.

6. Metallverstärkter Schichtverbund (11) nach einem der Patentansprüche 1 bis 5, wobei die maximale Breite (18) des Überlappungsbereichs (15) der Metallfolien (13, 14) kleiner als 10 mm ist.

7. Metallverstärkter Schichtverbund (11) nach einem der Patentansprüche 1 bis 5, wobei die maximale Breite (18) des Überlappungsbereichs (15) der Metallfolien (13, 14) zwischen 0,2 mm und 2 mm beträgt.

8. Metallverstärkter Schichtverbund (11) nach einem der Patentansprüche 1 bis 5, wobei die maximale Breite (18) des Überlappungsbereichs (15) der Metallfolien (13, 14) zwischen 0,5 mm und 1 mm beträgt.

9. Metallverstärkter Schichtverbund (11) nach einem der Patentansprüche 1 bis 8, wobei eine Überlappung der Metallfolien (13, 14) in deren voller Länge vorliegt.

10. Metallverstärkter Schichtverbund (11) nach einem der Patentansprüche 1 bis 9, wobei mindestens eine der Schweißnähte (16) einen Verlauf aufweist, der in mindestens einem Punkt (P) eine Richtungskomponente (22) senkrecht zur Längserstreckung (21) des Überlappungsbereiches (15) der Metallfolien (13, 14) aufweist.

11. Metallverstärkter Schichtverbund (11) nach einem der Patentansprüche 1 bis 10, wobei mindestens eine der Schweißnähte (16) ohne Unterbrechung entlang des Überlappungsbereichs (15) verläuft.

12. Metallverstärkter Schichtverbund (11) nach einem der Patentansprüche 1 bis 11, wobei der Verlauf der Schweißnaht (16) entlang des Überlappungsbereichs (15) periodisch ist.

13. Metallverstärkter Schichtverbund (11) nach einem der Patentansprüche 1 bis 12, wobei mindestens eine der Schweißnähte (16) einen sinusförmigen, mäanderförmigen, zickzackförmigen oder leitersprossenförmigen Verlauf aufweist.

14. Metallverstärkter Schichtverbund (11) nach einem der Patentansprüche 12 und 13, wobei die Periodenlänge des periodischen Verlaufs der Schweißnaht (16) kleiner als 25 mm ist.

15. Metallverstärkter Schichtverbund (11) nach einem der Patentansprüche 12 und 13, wobei die Periodenlänge des periodischen Verlaufs der Schweißnaht (16) zwischen 0,5 mm und 5 mm beträgt.

16. Metallverstärkter Schichtverbund (11) nach einem der Patentansprüche 12 und 13, wobei die Periodenlänge des periodischen Verlaufs der Schweißnaht (16) zwischen 1 mm und 2 mm beträgt.

17. Metallverstärkter Schichtverbund (11) nach einem der Patentansprüche 12 bis 16, wobei die Periodenlänge des periodischen Verlaufs der Schweißnaht (16) entlang des Überlappungsbereichs (15) variiert.

18. Metallverstärkter Schichtverbund (11) nach einem der voranstehenden Patentansprüche, wobei die Quererstreckung (17) der Schweißnaht (16) größer oder gleich der maximalen Breite (18) des Überlappungsbereiches (15) der Metallfolien (13, 14) ist.

19. Metallverstärkter Schichtverbund (11) nach einem der voranstehenden Patentansprüche, wobei die Quererstreckung (17) der Schweißnaht (16) etwa 1 bis etwa 2 mal die maximale Breite (18) des Überlappungsbereiches (15) der Metallfolien (13, 14) ist.

20. Metallverstärkter Schichtverbund (11) nach einem der Patentansprüche 1 bis 19, wobei mindestens eine der Schweißnähte (16) des Schichtverbundes (11) mindestens eine Unterbrechung entlang der Längserstreckung (21) des Überlappungsbereiches (15) aufweist.

21. Metallverstärkter Schichtverbund (11) nach einem der Patentansprüche 1 bis 20, wobei das Verschweißen der Metallfolien (13, 14) ganz oder teilweise im Pulsbetrieb ausgeführt ist, wobei die Breite der Schweißpunkte größer oder gleich als die maximale Breite (18) des Überlappungsbereichs (15) der Metallfolien (13, 14) ist.

22. Metallverstärkter Schichtverbund (11) nach einem der Patentansprüche 1 bis 20, wobei das Verschweißen der Metallfolien (13, 14) ganz oder teilweise im Pulsbetrieb ausgeführt ist, wobei sich mindestens zum Teil die Schweißpunkte in ihrer Erstreckung überlappen.

23. Metallverstärkter Schichtverbund (11) nach einem der Patentansprüche 21 oder 22, wobei sich mindestens zum Teil die Schweißpunkte in konstanten Abständen entlang der Längserstreckung (21) des Überlappungsbereichs (15) befinden.

24. Metallverstärkter Schichtverbund (11) nach einem der Patentansprüche 21 bis 23, wobei mindestens zum Teil in Längsrichtung des Überlappungsbereichs (15) aufeinander folgende Schweißpunkte in Richtung der Breite des Überlappungsbereichs (15) gegeneinander versetzt sind.

25. Metallverstärkter Schichtverbund (11) nach einem der Patentansprüche 21 bis 24, wobei mindestens zum Teil in Längsrichtung des Überlappungsbereichs (15) aufeinander folgende Schweißpunkte im Wechsel in Richtung der Breite des Überlappungsbereichs (15) auf der einen bzw. anderen Seite des Überlappungsbereichs (15) positioniert sind.

26. Metallverstärkter Schichtverbund (11) nach einem der Patentansprüche 1 bis 9, wobei mindestens eine aus mindestens zwei Metallfolien (13, 14) bestehende Metalleinlage (12) mindestens einen Durchgang (23) im Überlappungsbereich (15) der Metallfolien (13, 14) aufweist.

27. Metallverstärkter Schichtverbund (11) nach einem der Patentansprüche 10 bis 25, wobei mindestens eine der aus mindestens zwei Metallfolien (13, 14) bestehende Metalleinlage (12) zusätzlich mindestens einen Durchgang (23) im Überlappungsbereich (15) der Metallfolien (13, 14) aufweist.

28. Metallverstärkter Schichtverbund (11) nach einem der Patentansprüche 26 und 27, wobei der mindestens eine Durchgang (23) größer oder gleich der maximalen Breite (18) des Überlappungsbereiches (15) der Metallfolien (13, 14) ist.

29. Metallverstärkter Schichtverbund (11) nach einem der Patentansprüche 26 bis 28, wobei der Überlappungsbereich (15) in Abständen entlang des Überlappungsbereichs (15) Durchgänge (23) aufweist.

30. Metallverstärkter Schichtverbund (11) nach einem der Patentansprüche 26 bis 29, wobei der Überlappungsbereich (15) in konstanten Abständen entlang des Überlappungsbereichs (15) Durchgänge (23) aufweist.

31. Metallverstärkter Schichtverbund (11) nach einem der Patentansprüche 29 oder 30, wobei der Abstand der Durchgänge (23) entlang des Überlappungsbereichs (15) maximal 25 mm beträgt.

32. Metallverstärkter Schichtverbund (11) nach einem der Patentansprüche 29 oder 30, wobei der maximale Abstand der Durchgänge (23) entlang des Überlappungsbereichs (15) zwischen 1 mm und 10 mm liegt.

33. Metallverstärkter Schichtverbund (11) nach einem der Patentansprüche 29 oder 30, wobei der maximale Abstand der Durchgänge (23) entlang des Überlappungsbereichs (15) zwischen 3 und 5 mm liegt.

34. Metallverstärkter Schichtverbund (11) nach einem der Patentansprüche 1 bis 11, wobei mindestens eine der Schweißnähte (16) mindestens teilweise einen linearen, zur Längserstreckung (21) des Überlappungsbereiches (15) der Metallfolien (13, 14) parallelen Verlauf aufweist.

35. Metallverstärkter Schichtverbund (11) nach Patentanspruch 34, wobei die Breite mindestens einer der Schweißnähte (16), die einen linearen, zur Längserstreckung (21) des Überlappungsbereiches (15) der Metallfolien (13, 14) parallelen Verlauf aufweisen, mindestens teilweise größer oder gleich als die maximale Breite (18) des Überlappungsbereichs (15) ist.

36. Metallverstärkter Schichtverbund (11) nach Patentanspruch 34, wobei mindestens eine der Schweißnähte (16), die einen linearen, zur Längserstreckung (21) des Überlappungsbereiches (15) der Metallfolien (13, 14) parallelen Verlauf aufweisen, mindestens teilweise dadurch ausgeführt ist, daß mehrere Schweißnähte mit einen linearen, zur Längserstreckung (21) des Überlappungsbereiches (15) der Metallfolien (13, 14) parallelen Verlauf nebeneinander gelegt sind, wobei sie sich überlappen und die Gesamtbreite der hierdurch resultierenden Gesamtschweißnaht größer oder gleich als die maximale Breite (18) des Überlappungsbereiches (15) der Metallfolien (13, 14) ist.

37. Metallverstärkter Schichtverbund (11) gemäß Patentanspruch 34, wobei zusätzlich mindestens eine der Schweißnähte (16), die einen linearen, zur Längserstreckung (21) des Überlappungsbereiches (15) der Metallfolien (13, 14) parallelen Verlauf aufweisen, mindestens teilweise kombiniert wird mit mindestens einer Schweißnaht (16), die einen Verlauf aufweist, der mindestens in einem Punkt P eine Richtungskomponente (22) senkrecht zur Längserstreckung (21) des Überlappungsbereichs (15) aufweist.

38. Metallverstärkter Schichtverbund (11) nach einem der voranstehenden Patentansprüche aufweisend mindestens eine Lage (19) mindestens eines Weichstoffes und mindestens eine Metalleinlage (12).

39. Metallverstärkter Schichtverbund (11) nach einem der voranstehenden Patentansprüche, wobei die Metallfolien (13, 14) eine Dicke bis zu etwa 250 µm aufweisen.

40. Metallverstärkter Schichtverbund (11) nach einem der voranstehenden Patentansprüche, wobei die Metallfolien (13, 14) eine Dicke im Bereich von etwa 25 µm bis etwa 125 µm aufweisen.

41. Metallverstärkter Schichtverbund (11) nach einem der voranstehenden Patentansprüche, wobei die Metallfolien (13, 14) eine Dicke im Bereich von etwa 50 bis etwa 100 µm aufweisen.

42. Metallverstärkter Schichtverbund (11) nach einem der voranstehenden Patentansprüche, wobei die Metallfolien (13, 14) aus Stahl, Nickel oder Chrom-Nickel-Stahl bestehen.

43. Metallverstärkter Schichtverbund (11) nach einem der Patentansprüche 1 bis 42, der mindestens zwei Lagen (19, 20) aus mindestens einem Weichstoff und darin eingebettet mindestens eine Metalleinlage (12) aufweist.

44. Metallverstärkter Schichtverbund (11) nach einem der Patentansprüche 1 bis 43, der nur einen Weichstoff aufweist.

45. Metallverstärkter Schichtverbund (11) nach einem der Patentansprüche 1 bis 44, wobei einer der im Schichtverbund (11) enthaltenen Weichstoffe ein Weichstoff aus der Gruppe expandierter Graphit, PTFE oder Glimmer ist.

46. Metallverstärkter Schichtverbund (11] nach einem der Patentansprüche 1 bis 44, wobei jeder der im Schichtverbund (11) enthaltenen Weichstoffe ein Weichstoff aus der Gruppe expandierter Graphit, PTFE oder Glimmer ist.

47. Metallverstärkter Schichtverbund (11) nach einem der Patentansprüche 1 bis 44, wobei der Schichtverbund (11) nur einen Weichstoff aus der Gruppe expandierter Graphit, PTFE oder Glimmer beinhaltet.

48. Metallverstärkter Schichtverbund (11) nach einem der voranstehenden Patentansprüche, wobei mindestens eine Metalleinlage (12) aus Spießblech besteht.

49. Metallverstärkter Schichtverbund (11) nach einem der voranstehenden Patentansprüche, wobei alle Schweißnähte (16) im Schichtverbund (11), die Metallfolien (13, 14) verbinden, Widerstands- und/oder Laserstrahlschweißnähte sind.

50. Verwendung eines metallverstärkten Schichtverbundes (11) nach einem der voranstehenden Patentansprüche als Dichtungsplatte.

51. Verwendung eines metallverstärkten Schichtverbundes (11) nach einem der voranstehenden Patentansprüche zur Herstellung von Flachdichtungen (24) oder Stopfbuchspackungen.

52. Verfahren zur Herstellung eines metallverstärkten Schichtverbundes (11) aus mindestens einem Weichstoff aufweisend:
mindestens einmal erfolgendes Verschweißen von mindestens zwei sich mindestens partiell überlappenden Metallfolien (13, 14) im Überlappungsbereich (15) zur Schaffung einer Metalleinlage (12),
**dadurch gekennzeichnet, daß**
die Verschweißung der Metallfolien (13, 14) so ausgeführt wird, daß es im Überlappungsbereich (15) zwischen den Metallfolien (13, 14) keine und/oder keine in Längserstreckung (21) des Überlappungsbereiches (15) durchgehenden offenen Bereiche (7) gibt.

53. Verfahren zur Herstellung eines metallverstärkten Schichtverbundes (11) aus mindestens einem Weichstoff nach Patentanspruch 52
**dadurch gekennzeichnet, daß**
die Verschweißung der Metallfolien (13, 14) so ausgeführt wird, daß die offenen Bereiche im Überlappungsbereich (15) zwischen den Metallfolien (13, 14) in Längserstreckung (21) des Überlappungsbereiches (15) eine begrenzte Ausdehnung aufweisen.

54. Verfahren zur Herstellung eines metallverstärkten Schichtverbundes (11) aus mindestens einem Weichstoff nach Patentanspruch 53
**dadurch gekennzeichnet, daß**
die Verschweißung der Metallfolien (13, 14) so ausgeführt wird, daß die offenen Bereiche im Überlappungsbereich (15) zwischen den Metallfolien (13, 14) in Längserstreckung (21) des Überlappungsbreiches (15) eine maximale Ausdehnung aufweisen, die kleiner als 25 mm ist.

55. Verfahren nach einem der Patentansprüche 52 bis 54, wobei das Schweißen der sich überlappenden Metallfolien (13, 14) im Überlappungsbereich (15) mindestens teilweise dadurch erfolgt, daß das Schweißen entlang einer Linie durchgeführt wird, die mindestens in einem Punkt (P) eine Richtungskomponente (22) senkrecht zur Längserstreckung (21) des Überlappungsbereichs (15) der Metallfolien (13, 14) aufweist.

56. Verfahren nach einem der Patentansprüche 52 bis 55, bei dem das Schweißen mindestens teilweise derart erfolgt, daß mindestens ein Schweißvorgang entlang einer linearen, zur Längserstreckung (21) des Überlappungsbereiches (15) der Metallfolien (13, 14) parallelen Linie durchgeführt wird.

57. Verfahren nach einem der Patentansprüche 52 bis 55, bei dem das Schweißen mindestens teilweise derart erfolgt, daß es entlang der Längsrichtung (21) des Überlappungsbereichs (15) in einer sinusförmigen, mäanderförmigen, zickzackförmigen oder treppenförmigen Linie durchgeführt wird.

58. Verfahren nach einem der Patentansprüche 52 bis 57, wobei das Schweißen pulsierend und/oder kontinuierlich erfolgt.

59. Verfahren nach einem der Patentansprüche 52 bis 58, bei dem die Quererstreckung (17) beim Schweißen mindestens teilweise größer oder gleich der maximalen Breite (18) des Überlappungsbereiches (15) der Metallfolien (13, 14) ist.

60. Verfahren nach einem der Patentansprüche 52 bis 59, bei dem die Quererstreckung (17) beim Schweißen mindestens teilweise etwa 1 bis etwa 2 mal der Quererstreckung (18) des Überlappungsbereichs (15) der Metallfolien (13, 14) ist.

61. Verfahren nach einem der Patentansprüche 52 bis 60, bei dem das Schweißen durch Widerstands- und/oder Laserstrahlschweißen erfolgt.

62. Verfahren zur Herstellung eines metallverstärkten Schichtverbundes (11) aus mindestens einem Weichstoff aufweisend:
mindestens einmal erfolgendes Verschweißen von mindestens zwei sich mindestens partiell überlappenden Metallfolien (13, 14) im Überlappungsbereich (15) zur Schaffung einer Metalleinlage (12),
**dadurch gekennzeichnet, daß**
die Metalleinlage (12) mit mindestens einem Durchgang (23) im Überlappungsbereich (15) der Metallfolien (13, 14) versehen wird.

63. Verfahren nach Patentanspruch 62, wobei die Metalleinlage (12) mit zahlreichen Durchgängen (23) im Überlappungsbereich (15) und außerhalb des Überlappungsbereiches (15) versehen wird, um ein Spießblech zu schaffen.

64. Verfahren nach einem der Patentansprüche 52 bis 63, wobei die mindestens eine Metalleinlage (12) mit mindestens einer weiteren Lage (19, 20) aus mindestens einem Weichstoff verbunden wird.

65. Verwendung eines metallverstärkten Schichtverbundes (11), hergestellt nach dem in den Patentansprüchen 52 bis 64 beschriebenen Verfahren zur Herstellung von Flachdichtungen (24) oder Stopfbuchspackungen.

66. Dichtung, die aus einem in den Patentansprüchen 1 bis 49 beschriebenen metallverstärkten Schichtverbund (11) hergestellt ist.

67. Dichtung nach Patentanspruch 66, wobei die Schweißnaht (16) eine Periodenlänge aufweist, die geringer ist als die Dichtungsbreite (D) der Dichtung.

68. Verwendung von Metallfolien (12), die aus mindestens zwei sich mindestens
partiell überlappenden Metallfolien (13, 14) bestehen, die durch mindestens eine Schweißnaht (16) und/oder Verklammern in dem Überlappungsbereich (15) miteinander verbunden sind,
**dadurch gekennzeichnet, daß**
es an jeder der zwei Metallfolien (13, 14) verbindenden Schweißnähte (16) im Überlappungsbereich (15) zwischen den Metallfolien (13, 14) und in jedem Überlappungsbereich (15), wo zwei Metallfolien (13, 14) durch Verklammern verbunden sind, keine und/oder keine in Längserstreckung (21) des Überlappungsbereichs (15) durchgehenden offenen Bereiche vorhanden sind, zur Herstellung von metallverstärkten Schichtverbunden (11) aus mindestens einem Weichstoff.

69. Verwendung von Metallfolien (12), die aus mindestens zwei sich mindestens
partiell überlappenden Metallfolien (13, 14) bestehen, die durch mindestens eine Schweißnaht (16) und/oder Verklammern in dem Überlappungsbereich (15) miteinander verbunden sind,
**dadurch gekennzeichnet, daß**
es an jeder der zwei Metallfolien (13, 14) verbindenden Schweißnähte (16) im Überlappungsbereich (15) zwischen den Metall folien (13, 14) und in jedem Überlappungsbereich (15), wo zwei Metallfolien (13, 14) durch Verklammern verbunden sind, keine und/oder keine in Längserstreckung (21) des Überlappungsbereichs (15) durchgehenden offenen Bereiche vorhanden sind, zur Herstellung von metallverstärkten Dichtungsplatten aus mindestens einem Weichstoff.

70. Verwendung von Metallfolien (12), die aus mindestens zwei sich mindestens
partiell überlappenden Metallfolien (13, 14) bestehen, die durch mindestens eine Schweißnaht (16) und /oder Verklammern in dem Überlappungsbereich (15) miteinander verbunden sind,
**dadurch gekennzeichnet, daß**
es an jeder der zwei Metallfolien (13, 14) verbindenden Schweißnähte (16) im Überlappungsbereich (15) zwischen den Metallfolien (13, 14) und in jedem Überlappungsbereich (15), wo zwei Metallfolien (13, 14) durch Verklammern verbunden snd, keine und/oder keine in Längs erstreckung (21) des Überlappungsbereichs (15) durchgehenden offenen Bereiche vorhanden sind, zur Herstellung von metallverstärkten Dichtungen, insbesondere Flachdichtungen (24) aus mindestens einem Weichstoff.

## Claims

1. Metal-reinforced layered composite (11) made of one or more soft materials comprising at least one intermediate metal layer (12), wherein at least one of said intermediate metal layers (12) comprises at least two at least partially overlapping metal foils (13, 14), which are joined to one another in the overlap region (15) by at least one weld seam (16) and/or interlocking,
**characterized in that**
at each weld seam (16), which is provided in the layered composite (11) and by means of which two metal foils (13, 14) are joined, and in each overlap region, where two metal foils are joined by interlocking, there are no leakage channels and/or no continuous leakage channels (7) in the longitudinal extent (21) of the overlap region (15).

2. Metal-reinforced layered composite (11) according to claim 1, wherein, at its outwardly-directed flat sides, the layered composite is additionally completely covered by and joined to a gasproof foil made of an organic polymer.

3. Metal-reinforced layered composite (11) according to claim 1 or 2, wherein the maximum length of a non-continuous leakage channel in the longitudinal extent (21) of the overlap region (15) is less than 25 mm.

4. Metal-reinforced layered composite (11) according to claim 1 or 2, wherein the maximum length of a non-continuous leakage channel in the longitudinal extent (21) of the overlap region (15) is between 0.5 and 5 mm.

5. Metal-reinforced layered composite (11) according to claim 1 or 2, wherein the maximum length of a non-continuous leakage channel in the longitudinal extent (21) of the overlap region (15) is between 1 and 2 mm.

6. Metal-reinforced layered composite (11) according to one of claims 1 to 5, wherein the maximum width (18) of the overlap region (15) of the metal foils (13, 14) is less than 10 mm.

7. Metal-reinforced layered composite (11) according to one of claims 1 to 5, wherein the maximum width (18) of the overlap region (15) of the metal foils (13, 14) is between 0.2 mm and 2 mm.

8. Metal-reinforced layered composite (11) according to one of claims 1 to 5, wherein the maximum width (18) of the overlap region (15) of the metal foils (13, 14) is between 0.5 mm and 1 mm.

9. Metal-reinforced layered composite (11) according to one of claims 1 to 8, wherein an overlap of the metal foils (13, 14) extends along their entire length.

10. Metal-reinforced layered composite (11) according to one of claims 1 to 9, wherein at least one of the weld seams (16) has a course that at at least one point (P) has a direction component (22) at right angles to the longitudinal extent (21) of the overlap region (15) of the metal foils (13, 14).

11. Metal-reinforced layered composite (11) according to one of claims 1 to 10, wherein at least one of the weld seams (16) extends without interruption along the overlap region (15).

12. Metal-reinforced layered composite (11) according to one of claims 1 to 11, wherein the course of the weld seam (16) along the overlap region (15) is periodic.

13. Metal-reinforced layered composite (11) according to one of claims 1 to 12, wherein at least one of the weld seams (16) has a sinusoidal, meander-like, zigzag or ladder rung-like course.

14. Metal-reinforced layered composite (11) according to one of claims 12 and 13, wherein the periodic length of the periodic course of the weld seam (16) is less than 25 mm.

15. Metal-reinforced layered composite (11) according to one of claims 12 and 13, wherein the periodic length of the periodic course of the weld seam (16) is between 0.5 mm and 5 mm.

16. Metal-reinforced layered composite (11) according to one of claims 12 and 13, wherein the periodic length of the periodic course of the weld seam (16) is between 1 mm and 2 mm.

17. Metal-reinforced layered composite (11) according to one of claims 12 to 16, wherein the periodic length of the periodic course of the weld seam (16) varies along the overlap region (15).

18. Metal-reinforced layered composite (11) according to one of the preceding claims, wherein the transverse extent (17) of the weld seam (16) is greater than or equal to the maximum width (18) of the overlap region (15) of the metal foils (13, 14).

19. Metal-reinforced layered composite (11) according to one of the preceding claims, wherein the transverse extent (17) of the weld seam (16) is around 1 to 2 times the maximum width (18) of the overlap region (15) of the metal foils (13, 14).

20. Metal-reinforced layered composite (11) according to one of claims 1 to 19, wherein at least one of the weld seams (16) of the layered composite (11) has at least one interruption along the longitudinal extent (21) of the overlap region (15).

21. Metal-reinforced layered composite (11) according to one of claims 1 to 20, wherein the welding together of the metal foils (13, 14) has been effected entirely or partially in pulsed-mode operation, with the width of the welding spots being greater than or equal to the maximum width (18) of the overlap region (15) of the metal foils (13, 14).

22. Metal-reinforced layered composite (11) according to one of claims 1 to 20, wherein the welding together of the metal foils (13, 14) has been effected entirely or partially in pulsed-mode operation, with, at least in part, the welding spots overlapping in their extent.

23. Metal-reinforced layered composite (11) according to one of claims 21 or 22, wherein at least in part the welding spots are situated at constant intervals along the longitudinal extent (21) of the overlap region (15).

24. Metal-reinforced layered composite (11) according to one of claims 21 to 23, wherein welding spots arranged, at least in part, successively in the longitudinal direction of the overlap region (15) are mutually offset in the direction of the width of the overlap region (15).

25. Metal-reinforced layered composite (11) according to one of claims 21 to 24, wherein welding spots arranged, at least in part, successively in the longitudinal direction of the overlap region (15) are positioned so as to alternate to one or the other side of the overlap region (15) in the direction of the width of the overlap region (15).

26. Metal-reinforced layered composite (11) according to one of claims 1 to 9, wherein at least one intermediate metal layer (12) comprising at least two metal foils (13, 14) has at least one passage (23) in the overlap region (15) of the metal foils (13, 14).

27. Metal-reinforced layered composite (11) according to one of claims 10 to 25, wherein at least one intermediate metal layer (12) consisting of at least two metal foils (13, 14) additionally has at least one passage (23) in the overlap region (15) of the metal foils (13, 14).

28. Metal-reinforced layered composite (11) according to one of claims 26 and 27, wherein the at least one passage (23) is wider than or equal to the maximum width (18) of the overlap region (15) of the metal foils (13, 14).

29. Metal-reinforced layered composite (11) according to one of claims 26 to 28, wherein the overlap region (15) has passages (23) at intervals along the overlap region (15).

30. Metal-reinforced layered composite (11) according to one of claims 26 to 29, wherein the overlap region (15) has passages (23) at uniform intervals along the overlap region (15).

31. Metal-reinforced layered composite (11) according to one of claims 29 or 30, wherein the spacing of the passages (23) along the overlap region (15) is at most 25 mm.

32. Metal-reinforced layered composite (11) according to one of claims 29 or 30, wherein the maximum spacing of the passages (23) along the overlap region (15) is between 1 mm and 10 mm.

33. Metal-reinforced layered composite (11) according to one of claims 29 or 30, wherein the maximum spacing of the passages (23) along the overlap region (15) is between 3 mm and 5 mm.

34. Metal-reinforced layered composite (11) according to one of claims 1 to 11, wherein at least one of the weld seams (16) has at least partially a linear course parallel to the longitudinal extent (21) of the overlap region (15) of the metal foils (13, 14).

35. Metal-reinforced layered composite (11) according to claim 34, wherein the width of at least one of the weld seams (16), which have a linear course parallel to the longitudinal extent (21) of the overlap region (15) of the metal foils (13, 14), is at least in part greater than or equal to the maximum width (18) of the overlap region (15).

36. Metal-reinforced layered composite (11) according to claim 34, wherein at least one of the weld seams (16), which have a linear course parallel to the longitudinal extent (21) of the overlap region (15) of the metal foils (13, 14), is at least partially formed by a plurality of weld seams having a linear course parallel to the longitudinal extent (21) of the overlap region (15) of the metal foils (13, 14) being placed alongside one another, with the weld seams overlapping and the total width of the resultant total weld seam being greater than or equal to the maximum width (18) of the overlap region (15) of the metal foils (13, 14).

37. Metal-reinforced layered composite (11) according to claim 34, wherein, in addition, at least one of the weld seams (16), which have a linear course parallel to the longitudinal extent (21) of the overlap region (15) of the metal foils (13, 14), is at least partially combined with at least one weld seam (16) having a course that at least at one point P has a direction component (22) at right angles to the longitudinal extent (21) of the overlap region (15).

38. Metal-reinforced layered composite (11) according to one of the preceding claims, comprising at least one layer (19) of at least one soft material and at least one intermediate metal layer (12).

39. Metal-reinforced layered composite (11) according to one of the preceding claims, wherein the metal foils (13, 14) have a thickness of up to around 250 µm.

40. Metal-reinforced layered composite (11) according to one of the preceding claims, wherein the metal foils (13, 14) have a thickness in the region of around 25 µm to 125 µm.

41. Metal-reinforced layered composite (11) according to one of the preceding claims, wherein the metal foils (13, 14) have a thickness in the region of around 50 to 100 µm.

42. Metal-reinforced layered composite (11) according to one of the preceding claims, wherein the metal foils (13, 14) are made of steel, nickel or chrome nickel steel.

43. Metal-reinforced layered composite (11) according to one of claims 1 to 42, which comprises at least two layers (19, 20) of at least one soft material and at least one intermediate metal layer (12) embedded therein.

44. Metal-reinforced layered composite (11) according to one of claims 1 to 43, which comprises only one soft material.

45. Metal-reinforced layered composite (11) according to one of claims 1 to 44, wherein one of the soft materials contained in the layered composite (11) is a soft material from the group of expanded graphite, PTFE or mica.

46. Metal-reinforced layered composite (11) according to one of claims 1 to 44, wherein each of the soft materials contained in the layered composite (11) is a soft material from the group of expanded graphite, PTFE or mica.

47. Metal-reinforced layered composite (11) according to one of claims 1 to 44, wherein the layered composite (11) contains only one soft material from the group of expanded graphite, PTFE or mica.

48. Metal-reinforced layered composite (11) according to one of the preceding claims, wherein at least one intermediate metal layer (12) comprises a spiked sheet.

49. Metal-reinforced layered composite (11) according to one of the preceding claims, wherein all of the weld seams (16) in the layered composite (11), which join the metal foils (13, 14), are resistance weld seams and/or laser beam weld seams.

50. Use of a metal-reinforced layered composite (11) according to one of the preceding claims as a gasket sheet.

51. Use of a metal-reinforced layered composite (11) according to one of the preceding claims for manufacturing flat packings (24) or stuffing box packings.

52. Method of manufacturing a metal-reinforced layered composite (11) from at least one soft material comprising:
the welding together, at least once, of at least two at least partially overlapping metal foils (13, 14) in the overlap region (15) to create an intermediate metal layer (12),
**characterized in that**
the welding together of the metal foils (13, 14) is effected in such a way that in the overlap region (15) between the metal foils (13, 14) there are no open regions and/or no continuous open regions (7) in the longitudinal extent (21) of the overlap region (15).

53. Method of manufacturing a metal-reinforced layered composite (11) from at least one soft material according to claim 52,
**characterized in that**
the welding together of the metal foils (13, 14) is effected in such a way that the open regions in the overlap region (15) between the metal foils (13, 14) are of a limited extent in the longitudinal extent (21) of the overlap region (15).

54. Method of manufacturing a metal-reinforced layered composite (11) from at least one soft material according to claim 53,
**characterized in that**
the welding together of the metal foils (13, 14) is effected in such a way that the open regions in the overlap region (15) between the metal foils (13, 14) have, in the longitudinal extent (21) of the overlap region (15), a maximum extent which is less than 25 mm.

55. Method according to one of claims 52 to 54, wherein the welding of the overlapping metal foils (13, 14) in the overlap region (15) is effected at least partially by effecting the welding along a line, which at least at one point (P) has a direction component (22) at right angles to the longitudinal extent (21) of the overlap region (15) of the metal foils (13, 14).

56. Method according to one of claims 52 to 55, in which the welding is effected at least partially in such a way that at least one welding operation is effected along a linear line parallel to the longitudinal extent (21) of the overlap region (15) of the metal foils (13, 14).

57. Method according to one of claims 52 to 55, in which the welding is effected at least partially in such a way that it is carried out along the longitudinal direction (21) of the overlap region (15) in a sinusoidal, meander-like, zigzag or ladder rung-like line.

58. Method according to one of claims 52 to 57, wherein the welding is effected in a pulsed manner or continuously.

59. Method according to one of claims 52 to 58, in which, during welding, the transverse extent (17) is at least partially greater than or equal to the maximum width (18) of the overlap region (15) of the metal foils (13, 14).

60. Method according to one of claims 52 to 59, in which, during welding, the transverse extent (17) is at least partially around 1 to 2 times the transverse extent (18) of the overlap region (15) of the metal foils (13, 14).

61. Method according to one of claims 52 to 60, in which the welding is effected by resistance welding and/or laser beam welding.

62. Method of manufacturing a metal-reinforced layered composite (11) from at least one soft material comprising:
the welding together, at least once, of at least two at least partially overlapping metal foils (13, 14) in the overlap region (15) to create an intermediate metal layer (12),
**characterized in that**
the intermediate metal layer (12) is provided in the overlap region (15) of the metal foils (13, 14) with at least one passage (23).

63. Method according to claim 62, wherein the intermediate metal layer (12) is provided with numerous passages (23) in the overlap region (15) and outside of the overlap region (15) in order to create a spiked sheet.

64. Method according to one of claims 52 to 63, wherein the at least one intermediate metal layer (12) is joined to at least one further layer (19, 20) of at least one soft material.

65. Use of a metal-reinforced layered composite (11), manufactured according to the method described in claims 52 to 64, for manufacturing flat packings (24) or stuffing box packings.

66. Gasket, which is manufactured from a metal-reinforced layered composite (11) described in claims 1 to 49.

67. Gasket according to claim 66, wherein the weld seam (16) has a periodic length, which is less than the gasket width (D) of the gasket.

68. Use of metal foils (12), which comprise at least two at least partially overlapping metal foils (13, 14) which are joined to one another in the overlap region (15) by at least one weld seam (16) and/or interlocking,
**characterized in that**
at each of the weld seams (16), which join two metal foils (13, 14), in the overlap region (15) between the metal foils (13, 14) and in each overlap region (15), where two metal foils (13, 14) are joined by interlocking, there are no open regions and/or no continuous open regions in the longitudinal extent (21) of the overlap region (15), for manufacturing metal-reinforced layered composites (11) from at least one soft material.

69. Use of metal foils (12), which comprise at least two at least partially overlapping metal foils (13, 14) which are joined to one another in the overlap region (15) by at least one weld seam (16) and/or interlocking,
**characterized in that**
at each of the weld seams (16), which join two metal foils (13, 14), in the overlap region (15) between the metal foils (13, 14) and in each overlap region (15), where two metal foils (13, 14) are joined by interlocking, there are no open regions and/or no continuous open regions in the longitudinal extent (21) of the overlap region (15), for manufacturing metal-reinforced gasket sheets from at least one soft material.

70. Use of metal foils (12), which comprise at least two at least partially overlapping metal foils (13, 14) which are joined to one another in the overlap region (15) by at least one weld seam (16) and/or interlocking,
**characterized in that**
at each of the weld seams (16), which join two metal foils (13, 14), in the overlap region (15) between the metal foils (13, 14) and in each overlap region (15), where two metal foils (13, 14) are joined by interlocking, there are no open regions and/or no continuous open regions in the longitudinal extent (21) of the overlap region (15), for manufacturing metal-reinforced gaskets, in particular flat packings (24), from at least one soft material.

## Revendications

1. Stratifié renforcé par du métal (11) composé d'une ou plusieurs matières molles munies d'au moins un insert métallique (12),
au moins l'un des inserts métalliques (12) se composant d'au moins deux feuilles métalliques (13, 14) qui se chevauchent au moins partiellement, ces feuilles étant reliées par au moins un cordon de soudure (16) et/ou des agrafes dans la zone de chevauchement (15),
**caractérisé en ce qu'**
il n'y a pas et/ou aucun canal de fuite continu (7) dans la direction longitudinale (21) de la zone de chevauchement (15) au niveau de chaque cordon de soudure (16) existant dans le stratifié (11) pour relier deux feuilles métalliques (13, 14) et dont chaque zone de chevauchement ou deux feuilles métalliques sont reliées par des agrafes.

2. Stratifié renforcé par du métal (11) selon la revendication 1,
dans lequel
le stratifié est recouvert et est relié en plus sur ces grandes faces tournées vers l'extérieur, totalement à l'aide d'un film étanche au gaz en un polymère organique.

3. Stratifié renforcé par du métal (11) selon la revendication 1 ou 2,
dans lequel
la longueur maximale d'un canal de fuite non continu dans la direction longitudinale (21) de la zone de chevauchement (15) est inférieure à 25 mm.

4. Stratifié renforcé par du métal (11) selon la revendication 1 ou 2,
dans lequel
la longueur maximale d'un canal de fuite non continu dans la direction longitudinale (21) de la zone de chevauchement (15) est comprise entre 0,5 et 5 mm.

5. Stratifié renforcé par du métal (11) selon la revendication 1 ou 2,
dans lequel
la longueur maximale d'un canal de fuite non continu dans la direction longitudinale (21) de la zone de chevauchement (15) est comprise entre 1 et 2 mm.

6. Stratifié renforcé par du métal (11) selon l'une des revendications 1 à 5,
dans lequel
la largeur maximale (18) de la zone de chevauchement (15) des feuilles métalliques (13, 14) est inférieure à 10 mm.

7. Stratifié renforcé par du métal (11) selon l'une des revendications 1 à 5,
dans lequel
la largeur maximale (18) de la zone de chevauchement (15) des feuilles métalliques (13, 14) est comprise entre 0,2 et 2 mm.

8. Stratifié renforcé par du métal (11) selon l'une des revendications 1 à 5,
dans lequel
la largeur maximale (18) de la zone de chevauchement (15) des feuilles métalliques (13, 14) est comprise entre 0,5 et 1 mm.

9. Stratifié renforcé par du métal (11) selon l'une des revendications 1 à 8,
dans lequel
il y a un chevauchement des feuilles métalliques (13, 14) sur toute leur longueur.

10. Stratifié renforcé par du métal (11) selon l'une des revendications 1 à 9,
dans lequel
au moins l'un des cordons de soudure (16) présente un tracé ayant en au moins un point (P) une composante directionnelle (22) perpendiculaire à la direction longitudinale (21) de la zone de chevauchement (15) des feuilles métalliques (13, 14).

11. Stratifié renforcé par du métal (11) selon l'une des revendications 1 à 10,
dans lequel
au moins l'un des cordons de soudure (16) a une interruption le long de la zone de chevauchement (15).

12. Stratifié renforcé par du métal (11) selon l'une des revendications 1 à 11,
dans lequel
le tracé du cordon de soudure (16) suivant la zone de chevauchement (15) est périodique.

13. Stratifié renforcé par du métal (11) selon l'une des revendications 1 à 12,
dans lequel
au moins l'un des cordons de soudure (16) présente un tracé sinusoïdal, en forme de méandres, en forme de zigzag ou en forme de barreau d'échelle.

14. Stratifié renforcé par du métal (11) selon l'une des revendications 12 et 13,
dans lequel
la longueur de la période du tracé périodique du cordon de soudure (16) est inférieure à 25 mm.

15. Stratifié renforcé par du métal (11) selon l'une des revendications 12 et 13,
dans lequel
la longueur de la période du tracé périodique du cordon de soudure (16) est comprise entre 0,5 mm et 5 mm.

16. Stratifié renforcé par du métal (11) selon l'une des revendications 12 et 13,
dans lequel
la longueur de la période du tracé périodique du cordon de soudure (16) est comprise entre 1 mm et 2 mm.

17. Stratifié renforcé par du métal (11) selon l'une des revendications 12 à 16,
dans lequel
la longueur de la période du tracé périodique du cordon de soudure (16) varie le long de la zone de chevauchement (15).

18. Stratifié renforcé par du métal (11) selon l'une des revendications précédentes,
dans lequel
l'extension transversale (17) du cordon de soudure (16) est supérieure ou égale à la largeur maximale (18) de la zone de chevauchement (15) des feuilles métalliques (13, 14).

19. Stratifié renforcé par du métal (11) selon l'une des revendications précédentes,
dans lequel
l'extension transversale (17) du cordon de soudure (16) correspond à 1 et 2 fois la largeur maximale (18) de la zone de chevauchement (15) des feuilles métalliques (13, 14).

20. Stratifié renforcé par du métal (11) selon l'une des revendications 1 à 19,
dans lequel
au moins l'un des cordons de soudure (16) du stratifié (11) comporte au moins une interruption suivant l'extension longitudinale (21) de la zone de chevauchement (15).

21. Stratifié renforcé par du métal (11) selon l'une des revendications 1 à 20,
dans lequel
le soudage des feuilles métalliques (13, 14) est effectué totalement ou partiellement en mode impulsionnel et la largeur des points de soudure est supérieure ou égale à la largeur maximale (18) de la zone de chevauchement (15) des feuilles métalliques (13, 14).

22. Stratifié renforcé par du métal (11) selon l'une des revendications 1 à 20,
dans lequel
le soudage des feuilles métalliques (13, 14) est réalisé totalement ou partiellement en mode impulsionnel et au moins une partie des points de soudure se chevauche dans leur extension.

23. Stratifié renforcé par du métal (11) selon l'une des revendications 21 ou 22,
dans lequel
au moins en partie les points de soudure sont répartis à des intervalles constants sur l'extension longitudinale (21) de la zone de chevauchement (15).

24. Stratifié renforcé par du métal (11) selon l'une des revendications 21 à 23,
dans lequel
les points de soudure qui se suivent au moins en partie dans la direction longitudinale de la zone de chevauchement (15) sont décalés les uns par rapport aux autres dans la direction de la largeur de la zone de chevauchement (15).

25. Stratifié renforcé par du métal (11) selon l'une des revendications 21 à 24,
dans lequel
au moins en partie dans la direction longitudinale de la zone de chevauchement (15), les points de soudure qui se suivent, sont positionnés alternativement en direction de la largeur de la zone de chevauchement (15) d'un côté ou de l'autre de la zone de chevauchement (15).

26. Stratifié renforcé par du métal (11) selon l'une des revendications 1 à 9,
dans lequel
au moins l'un des inserts métalliques (12) formé d'au moins deux feuilles métalliques (13, 14) comporte au moins un passage (23) dans la zone de chevauchement (15) des feuilles métalliques (13, 14).

27. Stratifié renforcé par du métal (11) selon l'une des revendications 10 à 25,
dans lequel
au moins l'un des inserts métalliques (12) formé d'au moins deux feuilles métalliques (13, 14) comporte en plus au moins un passage (23) dans la zone de chevauchement (15) des feuilles métalliques (13, 14).

28. Stratifié renforcé par du métal (11) selon l'une des revendications 26 et 27,
dans lequel
au moins un passage (23) est supérieur ou égal à la largeur maximale (18) de la zone de chevauchement (15) des feuilles métalliques (13, 14).

29. Stratifié renforcé par du métal (11) selon l'une des revendications 26 à 28,
dans lequel
la zone de chevauchement (15) présente des passages (23) à intervalles le long de la zone de chevauchement (15).

30. Stratifié renforcé par du métal (11) selon l'une des revendications 26 à 29,
dans lequel
la zone de chevauchement (15) présente des passages (23) à des intervalles constants le long de la zone de chevauchement (15).

31. Stratifié renforcé par du métal (11) selon l'une des revendications 29 ou 30,
dans lequel
la distance des passages (23) le long de la zone de chevauchement (15) est au maximum égale à 25 mm.

32. Stratifié renforcé par du métal (11) selon l'une des revendications 29 ou 30,
dans lequel
la distance des passages (23) le long de la zone de chevauchement (15) est comprise entre 1 mm et 10 mm.

33. Stratifié renforcé par du métal (11) selon l'une des revendications 29 ou 30,
dans lequel
la distance des passages (23) le long de la zone de chevauchement (15) est comprise entre 3 mm et 5 mm.

34. Stratifié renforcé par du métal (11) selon l'une des revendications 1 à 11,
dans lequel
au moins l'un des cordons de soudure (16) présente au moins en partie un tracé linéaire parallèle à la direction longitudinale (21) de la zone de chevauchement (15) des feuilles métalliques (13, 14).

35. Stratifié renforcé par du métal (11) selon la revendication 34,
dans lequel
la largeur d'au moins l'un des cordons de soudure (16) qui présente un tracé linéaire parallèle à la direction longitudinale (21) de la zone de chevauchement (15) des feuilles métalliques (13, 14) est au moins en partie supérieure ou égale à la largeur maximale (18) de la zone de chevauchement (15).

36. Stratifié renforcé par du métal (11) selon la revendication 34,
dans lequel
au moins l'un des cordons de soudure (16) ayant un tracé linéaire, parallèle à l'extension longitudinale (21) de la zone de chevauchement (15) des feuilles métalliques (13, 14), est réalisé au moins en partie par plusieurs cordons de soudure ayant un tracé linéaire parallèle à l'extension longitudinale (21) de la zone de chevauchement (15) des feuilles métalliques (13, 14) et ces cordons se chevauchent et la largeur totale du cordon de soudure global obtenue est supérieure ou égale à la largeur maximale (18) de la zone de chevauchement (15) des feuilles métalliques (13, 14).

37. Stratifié renforcé par du métal (11) selon la revendication 34,
dans lequel
en plus au moins l'un des cordons de soudure (16) ayant un tracé linéaire parallèle à la direction longitudinale (21) de la zone de chevauchement (15) des feuilles métalliques (13, 14), sont au moins partiellement combinés à un cordon de soudure (16) ayant un tracé qui en au moins un point (P) présente une composante directionnelle (22) perpendiculaire à l'extension longitudinale (21) de la zone de chevauchement (15).

38. Stratifié renforcé par du métal (11) selon l'une des revendications précédentes, comportant au moins une couche (19) d'au moins une matière molle et d'au moins un insert métallique (12).

39. Stratifié renforcé par du métal (11) selon l'une des revendications précédentes,
dans lequel
les feuilles métalliques (13, 14) ont une épaisseur au plus égale à environ 250 µm.

40. Stratifié renforcé par du métal (11) selon l'une des revendications précédentes,
dans lequel
les feuilles métalliques (13, 14) ont une épaisseur de l'ordre de 25 µm jusqu'à environ 125 µm.

41. Stratifié renforcé par du métal (11) selon l'une des revendications précédentes,
dans lequel
les feuilles métalliques (13, 14) ont une épaisseur de l'ordre de 50 µm jusqu'à environ 100 µm.

42. Stratifié renforcé par du métal (11) selon l'une des revendications précédentes,
dans lequel
les feuilles métalliques (13, 14) sont en acier, en nickel ou en acier chrome nickel.

43. Stratifié renforcé par du métal (11) selon l'une des revendications 1 à 42, ayant au moins deux couches (19, 20) en au moins une matière molle intégrant au moins un insert métallique (12).

44. Stratifié renforcé par du métal (11) selon l'une des revendications 1 à 43, qui ne comporte qu'une matière molle.

45. Stratifié renforcé par du métal (11) selon l'une des revendications 1 à 44,
dans lequel
l'une des matières molles contenues dans le stratifié (11) est une matière molle du groupe du graphite expansé, du polytétrafluoréthylène PTFE ou d'un produit micassé.

46. Stratifié renforcé par du métal (11) selon l'une des revendications 1 à 44,
dans lequel
chaque matière molle contenue dans le stratifié (11) est choisie dans le groupe du graphite expansé, du polytétrafluoréthylène PTFE ou d'un produit micassé.

47. Stratifié renforcé par du métal (11) selon l'une des revendications 1 à 44,
dans lequel
le stratifié (11) ne contient qu'une matière molle du groupe du graphite expansé, du polytétrafluoréthylène PTFE ou d'un produit micassé.

48. Stratifié renforcé par du métal (11) selon l'une des revendications précédentes,
dans lequel
au moins un insert métallique (12) est en tôle à tiges d'accrochage.

49. Stratifié renforcé par du métal (11) selon l'une des revendications précédentes,
dans lequel
les cordons de soudure (16) du stratifié (11) reliant les feuilles métalliques (13, 14) sont des cordons de soudure réalisés par soudage, par résistance et/ou soudage par faisceau laser.

50. Application d'un stratifié renforcé par du métal (11) selon l'une des revendications précédentes, comme plaque d'étanchéité.

51. Utilisation d'un stratifié renforcé de métal (11) selon l'une des revendications précédentes pour fabriquer des joints plats (24) ou des garnitures de boîte à étoupe.

52. Procédé de fabrication d'un stratifié renforcé par du métal (11) dans au moins une matière molle comprenant
- au moins un soudage réalisé en une seule fois d'au moins deux feuilles métalliques (13, 14) qui se chevauchent au moins partiellement dans la zone de chevauchement (15) pour créer un insert métallique (12),
**caractérisé en ce que**
le soudage des feuilles métalliques (13, 14) est réalisé pour que dans la zone de chevauchement (15) entre les feuilles métalliques (13, 14) il n'y a pas de zone ouverte continue (7) et/ou pas de zone ouverte continue dans la direction longitudinale (21) de la zone de chevauchement (15).

53. Procédé de fabrication d'un stratifié renforcé par du métal (11) formé d'au moins une matière molle selon la revendication 52,
**caractérisé en ce que**
le soudage des feuilles métalliques (13, 14) est réalisé pour que les zones ouvertes dans la zone de chevauchement (15) entre les feuilles métalliques (13, 14) présentent une extension limitée dans la direction longitudinale (21) de la zone de chevauchement (15).

54. Procédé de fabrication d'un stratifié renforcé par du métal (11) à partir d'au moins une matière molle selon la revendication 53,
**caractérisé en ce que**
le soudage des feuilles métalliques (13, 14) est réalisé pour que les zones ouvertes dans la zone de chevauchement (15) entre les feuilles métalliques (13, 14) présentent dans la direction longitudinale (21) de la zone de chevauchement (15), une extension maximale inférieure à 25 mm.

55. Procédé selon l'une des revendications 52 à 54,
dans lequel
le soudage des feuilles métalliques (13, 14) qui se chevauchent dans la zone de chevauchement ( 15) est effectué au moins en partie en ce que le soudage est fait suivant une ligne qui en au moins un point (p) présente une composante directionnelle (22) perpendiculaire à la direction longitudinale (21) de la zone de chevauchement (15) des feuilles métalliques (13, 14).

56. Procédé selon l'une des revendications 52 à 55,
dans lequel
le soudage se fait au moins en partie en ce qu'on effectue au moins une opération de soudage le long d'une ligne linéaire parallèle à la direction longitudinale (21) de la zone de chevauchement (15) des feuilles métalliques (13, 14).

57. Procédé selon l'une des revendications 52 à 55,
dans lequel
le soudage se fait au moins en partie en ce qu'il est exécuté le long de la direction longitudinale (21) de la zone de chevauchement (15) suivant une ligne ayant une forme sinusoïdale, une forme de méandres, une forme de zigzag ou une forme d'escalier.

58. Procédé selon l'une des revendications 52 à 57,
dans lequel
le soudage se fait de manière impulsionnelle et/ou continue.

59. Procédé selon l'une des revendications 52 à 58,
dans lequel
l'extension transversale (17) lors du soudage est au moins en partie supérieure ou égale à la largeur maximale (18) de la zone de chevauchement (15) des feuilles métalliques (13, 14).

60. Procédé selon l'une des revendications 52 à 59,
dans lequel
l'extension transversale (17) lors du soudage correspond au moins à 1 jusqu'à environ 2 fois l'extension transversale (18) de la zone de chevauchement (15) des feuilles métalliques (13, 14).

61. Procédé selon l'une des revendications 52 à 60
dans lequel
le soudage se fait par un soudage par résistance et/ou par faisceau laser.

62. Procédé de fabrication d'un stratifié renforcé par du métal (11) en au moins une matière molle comprenant :
- au moins un soudage effectué une fois d'au moins deux feuilles métalliques (13, 14) qui se chevauchent au moins partiellement dans la zone de chevauchement (15) pour créer un insert métallique (12)
**caractérisé en ce que**
l'insert métallique (12) est muni au moins d'un passage (23) dans la zone de chevauchement (15) des feuilles métalliques (13, 14).

63. Procédé selon la revendication 62,
dans lequel
l'insert métallique (12) est muni de nombreux passages (23) dans la zone de chevauchement (15) et en dehors de la zone de chevauchement (15) pour créer une tôle à tiges d'accrochage.

64. Procédé selon l'une des revendications 52 à 63,
dans lequel
au moins un insert métallique (12) est relié à au moins une autre couche (19, 20) d'au moins une matière molle.

65. Utilisation d'un stratifié renforcé par du métal (11) fabriqué selon le procédé décrit aux revendications 52 à 64 pour fabriquer des joints plats (24) ou des garnitures de boîtes à étoupe.

66. Joint réalisé dans un stratifié renforcé de métal (11) selon les revendications 1 à 49.

67. Joint selon la revendication 66, dont le cordon de soudure (16) présente une longueur de période inférieure à la largeur de joint (D).

68. Utilisation de feuilles métalliques (12) composées d'au moins deux feuilles métalliques (13, 14) qui se chevauchent au moins partiellement, et qui sont reliées l'une à l'autre par au moins un cordon de soudure (16) et/ou des agrafes dans la zone de chevauchement (15)
**caractérisée en ce qu'**
au niveau de chaque cordon de soudure (16) reliant les deux feuilles métalliques (13, 14), dans la zone de chevauchement (15) entre les feuilles métalliques (13, 14) et dans chaque zone de chevauchement (15) où deux feuilles métalliques (13, 14) sont reliées par des agrafes, il n'y a pas de zone continue ouverte ou pas de zone continue ouverte dans la direction longitudinale (21) de la zone de chevauchement (15), pour réaliser un stratifié (11) renforcé de métal en au moins une matière molle.

69. Utilisation de feuilles métalliques (12) composées d'au moins deux feuilles métalliques (13, 14) qui se chevauchent au moins partiellement et sont reliées par au moins un cordon de soudure (16) et/ou par des agrafes dans la zone de chevauchement (15),
**caractérisée en ce qu'**
au niveau de chaque cordon de soudure (16) reliant deux feuilles métalliques (13, 14) dans la zone de chevauchement (15) entre les feuilles métalliques (13, 14) et dans chaque zone de chevauchement (15) où deux feuilles métalliques (13, 14) sont reliées par des agrafes, il n'y a pas de zone ouverte continue ou pas de zone ouverte s'étendant dans la direction longitudinale (21) de la zone de chevauchement (15) pour réaliser des plaques de joints renforcés par du métal en au moins une matière molle.

70. Utilisation de feuilles métalliques (12) formées d'au moins deux feuilles métalliques (13, 14) qui se chevauchent au moins partiellement et qui sont reliées par au moins un cordon de soudure (16) et/ou des agrafes dans la zone de chevauchement (15),
**caractérisée en ce qu'**
au niveau de chaque cordon de soudure (16) reliant deux feuilles métalliques (13, 14) dans la zone de chevauchement (15) entre les feuilles métalliques (13, 14) et dans chaque zone de chevauchement (15) où deux feuilles métalliques (13, 14) sont reliées par des agrafes, il n'y a pas de zone ouverte continue ou pas de zone ouverte continue s'étendant dans la direction longitudinale (21) de la zone de chevauchement (15) pour réaliser des joints renforcés par du métal notamment des joints plats (24) en au moins une matière molle.
